(19) Europäisches Patentamt
European Patent Office
Office européen des brevets

(11) **EP 4 661 548 A1**

(12) **EUROPEAN PATENT APPLICATION**
published in accordance with Art. 153(4) EPC

(43) Date of publication:
**10.12.2025 Bulletin 2025/50**

(21) Application number: **24756097.2**

(22) Date of filing: **05.02.2024**

(51) International Patent Classification (IPC):
**H04W 72/12** $^{(2023.01)}$

(52) Cooperative Patent Classification (CPC):
**H04W 72/12; H04W 72/21; H04W 72/53**

(86) International application number:
**PCT/CN2024/075946**

(87) International publication number:
**WO 2024/169723 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 CN 202310152929**

(71) Applicant: **Huawei Technologies Co., Ltd.**
**Shenzhen, Guangdong 518129 (CN)**

(72) Inventors:
• **LU, Yujiao**
  **Shenzhen, Guangdong 518129 (CN)**
• **FAN, Qiang**
  **Shenzhen, Guangdong 518129 (CN)**

(74) Representative: **Epping - Hermann - Fischer Patentanwaltsgesellschaft mbH**
**Schloßschmidstraße 5**
**80639 München (DE)**

(54) **INFORMATION TRANSMISSION METHOD AND APPARATUS**

(57) Embodiments of this application provide an information transmission method and apparatus. The method includes: determining, at a first moment in a configured grant CG periodicity and based on an amount of to-be-transmitted data in the CG periodicity and a transport block size TBS that can be transmitted through any one or more CG transmission resources in the CG periodicity, whether a plurality of CG transmission resources in the CG periodicity are used to transmit data for a first terminal device; and sending indication information to a network device, where the indication information indicates whether the plurality of CG transmission resources in the CG periodicity are used to transmit the data for the first terminal device. According to the foregoing method, the terminal device may determine, in one CG periodicity, whether to use or not use the plurality of CG transmission resources, and report the foregoing case to the network device, so that the network device allocates a CG transmission resource that is not used to another terminal device, to avoid a waste of resources.

FIG. 5

## Description

This application claims priority to Chinese Patent Application No. 202310152929.5, filed with the China National Intellectual Property Administration on February 16, 2023 and entitled "INFORMATION TRANSMISSION METHOD AND APPARATUS", which is incorporated herein by reference in its entirety.

## TECHNICAL FIELD

Embodiments of this application relate to the communication field, and more specifically, to an information transmission method and apparatus.

## BACKGROUND

Configured grant (configured grant, CG) may alternatively be referred to as static/semi-static scheduling, and is a scheduling manner in which an uplink resource is statically allocated to user equipment (user equipment, UE). The UE may directly transmit data on an agreed resource without waiting for a dynamic scheduling grant (dynamic grant, DG) from a base station.

A size of resources used for CG transmission is fixed in a currently supported CG configuration. A frame size of an extended reality service is not fixed, that is, an amount of data that needs to be transmitted by the UE in each periodicity is not the same all the time. If a CG with fixed resources is used, the CG resources may be greater than or less than resources required for an actual amount of to-be-transmitted data, causing a waste of resources or delayed data transmission.

An enhanced CG technology may be used to resolve the foregoing problem, that is, a plurality of CG transmission resources may be configured in one CG periodicity, where each CG transmission resource corresponds to one CG transmission occasion (CG occasion). In this way, the enhanced CG may be used to resolve the problem that a frame size of an XR service is not fixed. However, in the process of implementing the enhanced CG technology, the UE cannot determine specific CG transmission resources that are used and specific CG transmission resources that are not used. If the CG transmission resources that are not used are not processed later, the resources are wasted.

## SUMMARY

Embodiments of this application provide an information transmission method and apparatus. A terminal device may determine, in each CG periodicity, whether to use or not use a plurality of CG transmission resources, and report the foregoing case to a network device, so that the network device allocates a CG transmission resource that is not used to another terminal device, to avoid a waste of resources.

According to a first aspect, an information transmission method is provided. The method includes: determining, at a first moment in a configured grant CG periodicity and based on an amount of to-be-transmitted data in the CG periodicity and a transport block size TBS that can be transmitted through any one or more CG transmission resources in the CG periodicity, whether a plurality of CG transmission resources in the CG periodicity are used to transmit data for a first terminal device; and sending indication information to a network device, where the indication information indicates whether the plurality of CG transmission resources in the CG periodicity are used to transmit the data for the first terminal device.

Optionally, transport block sizes TBSs that can be transmitted by using the plurality of CG transmission resources in the CG periodicity may be the same or different.

Optionally, when the indication information indicates that the plurality of CG transmission resources are not used to transmit the data for the first terminal device, after receiving the indication information, the network device may prohibit the first terminal device from transmitting the data on the plurality of CG resources.

Optionally, when the indication information indicates that the plurality of CG transmission resources are not used to transmit the data for the first terminal device, after receiving the indication information, the network device may allocate the plurality of CG resources to another terminal device.

Optionally, the indication information may further indicate a quantity of CG resources used or not used by the first terminal device, and/or the indication information may further indicate sequence numbers of the CG resources used or not used by the first terminal device.

It should be understood that, in this application, the CG transmission resource may alternatively be referred to as a transmission resource corresponding to a CG occasion or referred to as a CG occasion for short.

In this embodiment of this application, the first terminal device may determine, in one CG periodicity, whether to use or not use a plurality of CG transmission resources, and report the foregoing case to the network device, so that the network device allocates a CG transmission resource that is not used to another terminal device, to avoid a waste of resources.

With reference to the first aspect, in some implementations of the first aspect, the first moment includes: a moment at which the first terminal device processes a 1st CG transmission resource in the CG periodicity; a moment at which the to-be-transmitted data in the CG periodicity arrives at an access stratum of the first terminal device; or a moment at which the first terminal device determines the amount of to-be-transmitted data in the CG periodicity.

Optionally, that the to-be-transmitted data in the CG periodicity arrives at the access stratum of the first terminal device may include that the to-be-transmitted data arrives for the first time, a part of the to-be-transmitted data arrives, or all of the to-be-transmitted data arrives.

Optionally, that the first terminal device processes the CG transmission resource may indicate that a medium access control (medium access control, MAC) layer of the first terminal device processes a configured grant associated with the CG transmission resource, or indicate that a MAC layer of the first terminal device generates a MAC protocol data unit (protocol data unit, PDU) for the CG transmission resource.

In this embodiment of this application, the first terminal device may determine, in each CG periodicity, whether to use or not use a plurality of CG transmission resources, and report the foregoing case to the network device, so that the network device allocates a CG transmission resource that is not used to another terminal device, to avoid a waste of resources.

With reference to the first aspect, in some implementations of the first aspect, determining, based on the amount of to-be-transmitted data in the CG periodicity and the transport block size TBS that can be transmitted through any one or more CG transmission resources in the CG periodicity, whether the plurality of CG transmission resources in the CG periodicity are used to transmit the data for the first terminal device includes: determining, according to the following formula, a quantity of CG transmission resources used to transmit the data for the first terminal device:

$$M = \lceil (\frac{A}{B}) \rceil$$

or determining, according to the following formula, a quantity of CG transmission resources that are not used to transmit the data for the first terminal device:

$$N = \lfloor (L - \frac{A}{B}) \rfloor$$

where M is the quantity of CG transmission resources used to transmit the data for the first terminal device, N is the quantity of CG transmission resources that are not used to transmit the data for the first terminal device, L is a total quantity of CG transmission resources in the CG periodicity, A is the amount of to-be-transmitted data in the CG periodicity, B is a TBS that can be transmitted through any CG resource in the CG periodicity, $\lceil \ \rceil$ is rounding up, and $\lfloor \ \rfloor$ is rounding down.

In the foregoing two formulas, the amount of to-be-transmitted data in the CG periodicity may be a total amount of transmitted data from all logical channels (logical channel, LCH) that can be mapped to the CG configuration in one CG periodicity.

With reference to the first aspect, in some implementations of the first aspect, the first moment includes a moment at which the first terminal device processes each CG transmission resource in the CG periodicity.

In this embodiment of this application, when processing each CG transmission resource in the CG periodicity, the first terminal device may determine whether to use the plurality of CG transmission resources or not. In this way, the first terminal device can perform calculation a plurality of times in one periodicity, to obtain a more accurate calculation result.

With reference to the first aspect, in some implementations of the first aspect, determining, based on the amount of to-be-transmitted data in the CG periodicity and the transport block size TBS that can be transmitted through any one or more CG transmission resources in the CG periodicity, whether the plurality of CG transmission resources in the CG periodicity are used to transmit the data for the first terminal device includes: determining, based on the amount of to-be-transmitted data, the TBS that can be transmitted through any one or more CG transmission resources, and a quantity of CG transmission resources that have been used in the CG periodicity, whether the plurality of CG transmission resources are used to transmit the data for the first terminal device.

In this embodiment of this application, when it is determined that the plurality of CG transmission resources are used or are not used, the quantity of CG transmission resources that have been used in the CG periodicity is considered, to obtain a more accurate calculation result. This helps the network device allocate a CG transmission resource that is not used to another terminal device, to avoid a waste of resources.

With reference to the first aspect, in some implementations of the first aspect, determining, based on the amount of to-be-transmitted data, the TBS that can be transmitted through any one or more CG transmission resources, and the quantity of CG transmission resources that have been used in the CG periodicity, whether the plurality of CG transmission resources are used to transmit the data for the first terminal device includes: determining, according to the following formula, a quantity of CG transmission resources used to transmit the data for the first terminal device:

$$M = \lceil (i + \frac{A}{B}) \rceil$$

or determining, according to the following formula, a quantity of CG transmission resources that are not used to transmit the data for the first terminal device:

$$N = \lfloor (L - i - \frac{A}{B}) \rfloor$$

where M is the quantity of CG transmission resources used to transmit the data for the first terminal device, N is the quantity of CG transmission resources that are not used to transmit the data for the first terminal device, L is a total quantity of CG transmission resources in the CG periodicity, i is the quantity of CG transmission resources that have been used, A is the amount of to-be-transmitted data in the CG periodicity, B is a TBS that can be transmitted through any CG resource in the CG periodicity, $\lceil \rceil$ is rounding up, and $\lfloor \rfloor$ is rounding down.

In the foregoing two formulas, the amount of to-be-transmitted data in the CG periodicity may be an amount of remaining to-be-transmitted data from all LCHs that can be mapped to the CG configuration in the CG periodicity when each CG occasion is processed.

With reference to the first aspect, in some implementations of the first aspect, determining, based on the amount of to-be-transmitted data in the CG periodicity and the transport block size TBS that can be transmitted through any one or more CG transmission resources in the CG periodicity, whether the plurality of CG transmission resources in the CG periodicity are used to transmit the data for the first terminal device includes: determining, based on the amount of to-be-transmitted data, the TBS that can be transmitted through any one or more CG transmission resources, and a preset factor, whether the plurality of CG transmission resources are used to transmit the data for the first terminal device, where the preset factor is associated with an amount of data in a medium access control MAC packet header and/or a medium access control control element MAC CE in the to-be-transmitted data.

In this embodiment of this application, because the amount of to-be-transmitted data may include other additional information such as the MAC packet header and the MAC CE, the terminal device may estimate, in a process of calculating whether the plurality of CG transmission resources are used or not used, the other additional information that may exist, and consider the other additional information into the amount of to-be-transmitted data, to avoid insufficient CG transmission resources used in final calculation.

According to a second aspect, an information transmission method is provided. The method includes: determining, based on an amount of to-be-transmitted data in a CG periodicity and a TBS that can be transmitted through any one or more CG transmission resources in the CG periodicity, whether K consecutive CG transmission resources after one CG transmission resource in the CG periodicity are used to transmit data for a first terminal device, where K is a positive integer; and sending indication information to a network device, where the indication information indicates whether the K CG transmission resources are used to transmit the data for the first terminal device.

Optionally, K is predefined or configured by the network device.

Optionally, the indication information may further indicate whether all or some of the K CG transmission resources are used to transmit the data for the first terminal device, and/or indicate a quantity of CG resources used or not used by the first terminal device in the K CG transmission resources, and/or indicate a sequence number of CG resources used or not used by the first terminal device in the K CG transmission resources.

In this embodiment of this application, the first terminal device may determine whether the K consecutive CG resources after one CG transmission resource in the CG periodicity are used to transmit the data for the first terminal device. In this way, a quantity of CG transmission resources that are finally used or not used do not need to be directly calculated, and a problem that a calculation result is inaccurate due to an unstable amount of to-be-transmitted data can be resolved.

With reference to the second aspect, in some implementations of the second aspect, determining, based on the amount of to-be-transmitted data in the CG periodicity and the TBS that can be transmitted through any one or more CG transmission resources in the CG periodicity, whether the K consecutive CG transmission resources after one CG transmission resource in the CG periodicity are used to transmit the data for the first terminal device includes: when the amount of to-be-transmitted data is greater than or equal to a first value, determining that all of the K CG transmission resources are used to transmit the data for the first terminal device; or when the amount of to-be-transmitted data is less than a first value, determining that not all of the K CG transmission resources are used to transmit the data for the first terminal device, where the first value is a product of K and a TBS that can be transmitted through any transmission resource.

According to a third aspect, an information transmission method is provided. The method includes: determining, based on an amount of to-be-transmitted data in a CG periodicity and a TBS that can be transmitted through any one or more CG transmission resources in the CG periodicity, a first CG transmission resource in the CG periodicity that is not used to transmit data for a first terminal device; and refreshing a buffer of a hybrid automatic repeat request HARQ process corresponding to the first CG transmission resource.

In this embodiment of this application, after determining the first CG transmission resource that is not used to transmit the data for the first terminal device, the first terminal device may refresh the buffer of the HARQ process corresponding to the first CG resource. In this way, the network device can be prevented from scheduling retransmission by mistake because the network device considers that the first CG transmission resource is used. Consequently, the first terminal device sends buffered data in the buffer of the HARQ process to the network device, and the network device performs unnecessary processing.

With reference to the third aspect, in some implementations of the third aspect, refreshing the buffer of the hybrid automatic repeat request HARQ process corresponding to the first CG transmission resource includes: refreshing the buffer of the HARQ process when a configured grant timer corresponding to the HARQ process is not running.

After a CG transmission resource transmits the data by using a specific HARQ process, the terminal device may start a configured grant timer for the HARQ process. When the timer runs, another CG transmission resource cannot use the HARQ process.

In this embodiment of this application, when the configured grant timer corresponding to the HARQ process is not running, buffers of HARQ processes corresponding to the plurality of CG resources may be refreshed, so that the network device can be prevented from scheduling retransmission by mistake because the network device considers that the plurality of CG transmission resources are used.

According to a fourth aspect, a resource transmission method is provided. The method includes: when an amount of to-be-transmitted data of a first terminal device in a CG periodicity is greater than a sum of TBSs that can be transmitted through first X CG transmission resources in the CG periodicity, and is less than or equal to a sum of TBSs that can be transmitted through first X+1 CG transmission resources in the CG periodicity, sending indication information to a network device, where the indication information indicates the first terminal device to use first M CG transmission resources in the CG periodicity, or the indication information indicates the first terminal device not to use last N CG transmission resources in the CG periodicity; X is a non-negative integer, M is greater than or equal to X+1 and less than or equal to L, N is greater than or equal to 0 and less than or equal to L-X-1, and L is a total quantity of CG transmission resources in the CG periodicity.

The amount of to-be-transmitted data in the CG periodicity may be a total amount of transmitted data from all LCHs that can be mapped to the CG configuration in one CG periodicity.

In this embodiment of this application, when the amount of to-be-transmitted data of the first terminal device meets a specific condition, the first terminal device reports, to the network device, a usage status of the CG transmission resources in the CG periodicity, so that the network device allocates a CG transmission resource that is not used to another terminal device, to avoid a waste of resources.

According to a fifth aspect, an information transmission apparatus is provided. The apparatus includes a transceiver unit and a processing unit. The processing unit is configured to determine, at a first moment in a configured grant CG periodicity and based on an amount of to-be-transmitted data in the CG periodicity and a transport block size TBS that can be transmitted through any one or more CG transmission resources in the CG periodicity, whether a plurality of CG transmission resources in the CG periodicity are used to transmit data for a first terminal device; and the transceiver unit is configured to send indication information to a network device, where the indication information indicates whether the plurality of CG transmission resources in the CG periodicity are used to transmit the data for the first terminal device.

With reference to the fifth aspect, in some implementations of the fifth aspect, the first moment includes: a moment at which the first terminal device processes a 1st CG transmission resource in the CG periodicity; a moment at which the to-be-transmitted data in the CG periodicity arrives at an access stratum of the first terminal device; or a moment at which the first terminal device determines the amount of to-be-transmitted data in the CG periodicity.

With reference to the fifth aspect, in some implementations of the fifth aspect, the processing unit is specifically configured to determine, according to the following formula, a quantity of CG transmission resources used to transmit the data for the first terminal device:

$$M = \lceil (\frac{A}{B}) \rceil$$

or determine, according to the following formula, a quantity of CG transmission resources that are not used to transmit the data for the first terminal device:

$$N = \lfloor (L - \frac{A}{B}) \rfloor$$

where M is the quantity of CG transmission resources used to transmit the data for the first terminal device, N is the quantity of CG transmission resources that are not used to transmit the data for the first terminal device, L is a total quantity of CG transmission resources in the CG periodicity, A is the amount of to-be-transmitted data in the CG periodicity, B is a TBS that can be transmitted through any CG resource in the CG periodicity, $\lceil \rceil$ is rounding up, and $\lfloor \rfloor$ is rounding down.

With reference to the fifth aspect, in some implementations of the fifth aspect, the first moment includes a moment at which the first terminal device processes each CG transmission resource in the CG periodicity.

With reference to the fifth aspect, in some implementations of the fifth aspect, the processing unit is specifically configured to determine, based on the amount of to-be-transmitted data, the TBS that can be transmitted through any one or more CG transmission resources, and a quantity of CG transmission resources that have been used in the CG periodicity, whether the plurality of CG transmission resources are used to transmit the data for the first terminal device.

With reference to the fifth aspect, in some implementations of the fifth aspect, the processing unit is specifically configured to determine, according to the following formula, a quantity of CG transmission resources used to transmit the data for the first terminal device:

$$M = \lceil (i + \frac{A}{B}) \rceil$$

or determine, according to the following formula, a quantity of CG transmission resources that are not used to transmit the data for the first terminal device:

$$N = \lfloor (L - i - \frac{A}{B}) \rfloor$$

where M is the quantity of CG transmission resources used to transmit the data for the first terminal device, N is the quantity of CG transmission resources that are not used to transmit the data for the first terminal device, L is a total quantity of CG transmission resources in the CG periodicity, i is the quantity of CG transmission resources that have been used, A is the amount of to-be-transmitted data in the CG periodicity, B is a TBS that can be transmitted through any CG resource in the CG periodicity, $\lceil \rceil$ is rounding up, and $\lfloor \rfloor$ is rounding down.

With reference to the fifth aspect, in some implementations of the fifth aspect, the processing unit is specifically configured to determine, based on the amount of to-be-transmitted data, the TBS that can be transmitted through any one or more CG transmission resources, and a preset factor, whether the plurality of CG transmission resources are used to transmit the data for the first terminal device, where the preset factor is associated with an amount of data in a medium access control MAC packet header and/or a medium access control control element MAC CE in the to-be-transmitted data.

According to a sixth aspect, an information transmission apparatus is provided. The apparatus includes a transceiver unit and a processing unit. The processing unit is configured to determine, based on an amount of to-be-transmitted data in a CG periodicity and a TBS that can be transmitted through any one or more CG transmission resources in the CG periodicity, whether K consecutive CG transmission resources after any CG transmission resource in the CG periodicity are used to transmit data for a first terminal device, where K is a positive integer; and the transceiver unit is configured to send indication information to a network device, where the indication information indicates whether the K CG transmission resources are used to transmit the data for the first terminal device.

With reference to the sixth aspect, in some implementations of the sixth aspect, the processing unit is specifically configured to: when the amount of to-be-transmitted data is greater than or equal to a first value, determine that all of the K CG transmission resources are used to transmit the data for the first terminal device; or when the amount of to-be-transmitted data is less than a first value, determine that not all of the K CG transmission resources are used to transmit the data for the first terminal device, where the first value is a product of K and a TBS that can be transmitted through any transmission resource.

According to a seventh aspect, an information transmission apparatus is provided. The apparatus includes a processing unit. The processing unit is configured to: determine, based on an amount of to-be-transmitted data in a CG periodicity and a TBS that can be transmitted through any one or more CG transmission resources in the CG periodicity, a first CG resource in the CG periodicity that is not used to transmit data for a first terminal device; and refresh a buffer of a hybrid automatic repeat request HARQ process corresponding to the first CG transmission resource.

With reference to the seventh aspect, in some implementations of the seventh aspect, the processing unit is specifically configured to refresh the buffer of the HARQ process when a configured grant timer corresponding to the HARQ process is not running.

According to an eighth aspect, an information transmission apparatus is provided. The apparatus includes a processing unit. The processing unit is configured to: when an amount of to-be-transmitted data of a first terminal device in a CG periodicity is greater than a sum of TBSs that can be transmitted through first X CG transmission resources in the CG periodicity, and is less than or equal to a sum of TBSs that can be transmitted through first X+1 CG transmission resources in the CG periodicity, send indication information to a network device, where the indication information indicates the first terminal device to use first M CG transmission resources in the CG periodicity, or the indication information indicates the first terminal device not to use last N CG transmission resources in the CG periodicity; X is a non-negative integer, M is greater than or equal to X+1 and less than or equal to L, N is greater than or equal to 0 and less than or equal to L-X-1, and L is a total quantity of CG transmission resources in the CG periodicity.

The amount of to-be-transmitted data in the CG periodicity may be a total amount of transmitted data from all LCHs that can be mapped to the CG configuration in one CG periodicity.

According to a ninth aspect, an information transmission apparatus is provided. The apparatus includes at least one processor and a memory. The at least one processor is coupled to the memory, and is configured to read and execute instructions in the memory, to enable the apparatus to implement the method according to any one of the implementations of the first aspect to the fourth aspect.

According to a tenth aspect, a computer-readable storage medium is provided. The computer-readable storage medium stores program code, and when the computer program code is run on a computer, the computer is enabled to perform the method according to any one of the implementations of the first aspect to the fourth aspect.

According to an eleventh aspect, a chip is provided. The chip includes a circuit, and the circuit is configured to perform the method according to any one of the implementations of the first aspect to the fourth aspect.

According to a twelfth aspect, a terminal device is provided. The terminal device includes the information transmission apparatus according to any one of the implementations of the fifth aspect to the eighth aspect.

## BRIEF DESCRIPTION OF DRAWINGS

FIG. 1 is a diagram of a system architecture to which an information transmission method is applicable according to an embodiment of this application;

FIG. 2 is a diagram of an XR downlink service model provided in 3GPP according to an embodiment of this application;

FIG. 3 is a diagram of resources of a CG type 1 and a CG type 2 according to an embodiment of this application;

FIG. 4 is a diagram of a plurality of CG PUSCH resources in one CG periodicity according to an embodiment of this application;

FIG. 5 is a schematic flowchart of an information transmission method according to an embodiment of this application;

FIG. 6 is a schematic flowchart of an information transmission method according to an embodiment of this application;

FIG. 7 is a schematic flowchart of an information transmission method according to an embodiment of this application;

FIG. 8 is a schematic flowchart of an information transmission method according to an embodiment of this application;

FIG. 9 is a schematic flowchart of another information transmission method according to an embodiment of this application;

FIG. 10 is a diagram of reporting, by UE to a gNB, a CG occasion that is not used according to an embodiment of this application;

FIG. 11 is a schematic flowchart of another information transmission method according to an embodiment of this application;

FIG. 12 is a schematic flowchart of another information transmission method according to an embodiment of this application;

FIG. 13 is a schematic flowchart of another information transmission method according to an embodiment of this application;

FIG. 14 is a diagram of determining whether a next CG occasion in a periodicity is used according to an embodiment of this application;

FIG. 15 is a diagram of determining whether next three CG occasions in a periodicity are used according to an embodiment of this application;

FIG. 16 is a diagram in which a gNB schedules UE to retransmit a $TB_2$ according to an embodiment of this application;

FIG. 17 shows an information transmission apparatus according to an embodiment of this application; and

FIG. 18 shows another information transmission apparatus according to an embodiment of this application.

## DESCRIPTION OF EMBODIMENTS

The following describes technical solutions of embodiments in this application with reference to accompanying drawings.

The technical solutions of embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD), a universal mobile telecommunications system (Universal Mobile Telecommunications System, UMTS), a worldwide interoperability for microwave access (Worldwide Interoperability for Microwave Access, WiMAX) communication system, a future 5th generation (5th Generation, 5G) system, a new radio (New Radio, NR) system, or the like.

The terminal device in embodiments of this application may alternatively be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a hand-held device having a wireless communication function, a computing device, another processing device connected to a wireless modem, an in-vehicle device, a wearable device, a terminal device in a future 5G network, a terminal device in a future evolved public land mobile network (Public Land Mobile Network, PLMN), or the like. This is not limited in embodiments of this application.

A network device in embodiments of this application may be a device configured to communicate with a terminal device. The network device may be a base station (Base Transceiver Station, BTS) in a global system for mobile communication (Global System for Mobile communication, GSM) system or a code division multiple access (Code Division Multiple Access, CDMA) system, a NodeB (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay node, an access point, an in-vehicle device, a wearable device, a network device in a future 5G network, a network device in a future evolved PLMN network, or the like. This is not limited in embodiments of this application.

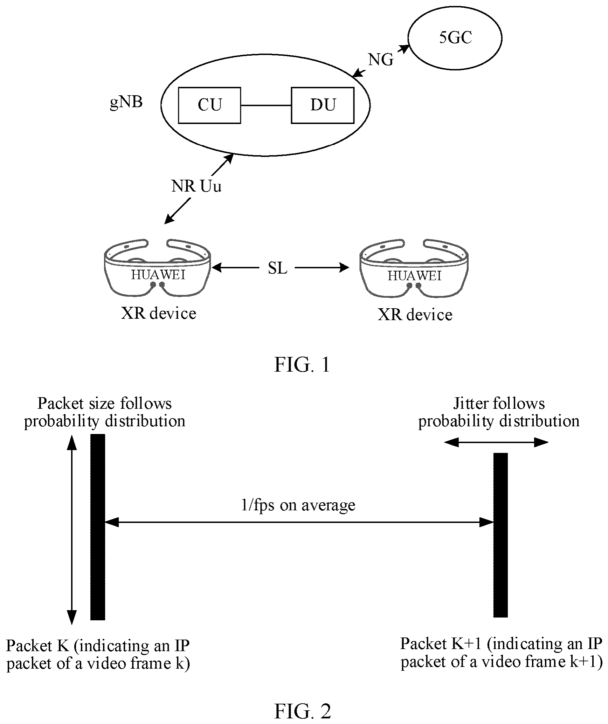

A network element in embodiments of this application includes at least any one of user equipment, an augmented reality (augmented reality, AR)/virtual reality (virtual reality, VR)/extended reality (extended reality, XR) device, a wearable device, a smart home appliance terminal, a terminal device and a communication module of the terminal device, a mobile phone and a communication module of the mobile phone, a vehicle and a communication module of the vehicle, an information processing device, a display device, a network device, a base station, a TRP, customer premise equipment (customer premise equipment, CPE), a router, a network access device, and the like. In terms of Uu (UTRAN-to-terminal device) air interface transmission, two parties of wireless communication include a network apparatus and a user communication device. In terms of SL air interface transmission, a receiving end and a transmitting end of wireless communication are both user communication devices. In a diagram of a system architecture as shown in FIG. 1, a network device may be a conventional macro base station eNB in a conventional UMTS/LTE wireless communication system, may be a micro base station eNB in a heterogeneous network (heterogeneous network, HetNet) scenario, may be a baseband unit (baseband unit, BBU) and a remote radio unit (remote radio unit, RRU) in a distributed base station scenario, may be a baseband pool BBU pool and a radio frequency unit RRU in a CRAN scenario, or may be a gNB in a future wireless communication system. When the network device is a gNB, a CU-DU split architecture may be used, or a CU-DU split architecture may not be used. The user equipment may be an in-vehicle communication module or another embedded communication module, or may be a hand-held communication device of a user, including a mobile phone, a tablet computer, an XR device, and the like. Sidelink (sidelink, SL) communication may be performed between a user communication device (for example, an XR device) and a user communication device (for example, an XR device).

For ease of understanding of embodiments of this application, concepts and technologies involved in embodiments of this application are first briefly introduced.

(1) PDU set (PDU set): A set of a plurality of packets at a transport layer, corresponding to a minimum granularity for data processing at an application layer. In some application scenarios, the application layer may correctly parse a corresponding data unit only after correctly receiving all packets in the PDU set. In some other application scenarios, the application layer may parse a corresponding data unit after correctly receiving a specific proportion of packets in the PDU set.

(2) Data burst (Data burst): According to 3GPP specifications, a burst is a set of data PDUs (for example, an XR service frame) generated and sent by an application in an extremely short period of time. A data burst may include one or more PDU sets.

(3) Configured grant (configured grant, CG): The configured grant may alternatively be referred to as static/semi-static scheduling, and is a scheduling manner in which an uplink resource is statically allocated to UE. The UE may directly transmit data on an agreed resource without waiting for a dynamic scheduling grant (dynamic grant, DG) from a base station.

XR may be an environment, combining real and virtual, generated by a computing technology and a wearable device, and human-machine interaction, and specifically includes the following several typical forms: AR, VR, and mixed reality (mixed reality, MR). XR is one of 5G multimedia applications that are mainly considered in the industry field currently. In 3GPP Release-17, modeling and analysis are performed on features of an XR service. Usually, the XR service periodically generates a data frame at a specific frame rate. An AR or XR service may have the following main service features:

(1) The frame rate may be 60 frames per second (frames per second, fps), that is, 60 frames of video images are generated per second, and one video frame appears approximately every 16.66 ms; and a transmission rate is 20 megabits per second (megabits per second, Mbps), 45 Mbps, or the like. The frame rate may alternatively be 120 fps, that is, 120 frames of video images are generated per second, and one video frame appears approximately every 8.33 ms.

(2) Jitter: The coding of a data frame may have a specific delay. Consequently, jitter (jitter) occurs at a moment at which the data frame arrives at an air interface. Generally, the jitter may be considered to follow the truncated Gaussian distribution, and a truncated range is approximately [-4, 4] ms. That is, a data arrival moment in each periodicity may be advanced or delayed by at most 4 ms in the periodicity.

(3) Frame size variation: A size of a data frame is not fixed, and generally follows the truncated Gaussian distribution. A mean may be expressed as mean=$R \times 1e6/F/8$, where F is a frame rate, and R is a rate of a data stream. For example, F=60 fps, and R=20 Mbps. In this case, mean=41.67 KBytes. Generally, the size of the data frame is between 0.5*mean and 1.5*mean.

As shown in FIG. 2, it can be learned from FIG. 2 that a size of an XR service packet follows a specific probability distribution, a packet arrives at a base station side according to an average periodicity of 1/fps, and jitter at an arrival moment of the packet follows a specific probability distribution.

In the foregoing XR data transmission process, a base station may allocate a resource based on a CG. For example, the base station may notify, by using control information (including radio resource control (radio resource control, RRC) signaling or physical layer signaling), the terminal device to transmit data at a frequency band Y at a moment X, and then transmit data (uplink) at the frequency band Y at a moment X+nT (where n is a positive integer) at an interval of a periodicity T. Compared with a conventional dynamic scheduling process, no grant is required for each data transmission by using the CG. Therefore, a scheduling delay may be shortened by using the CG, and overheads of downlink control information (downlink control information, DCI) may also be reduced.

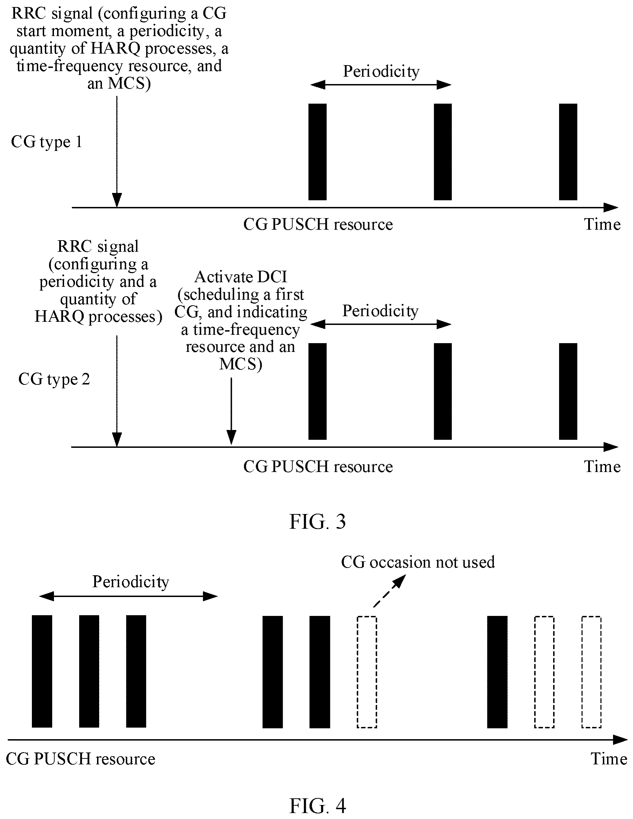

The base station can configure a plurality of CGs for UE. As shown in FIG. 3, two types of CGs may be defined: a configured grant type 1 (configured grant type 1) and a configured grant type 2 (configured grant type 1).

When a base station allocates a radio resource to a terminal device by using the CG type 1, parameters such as a time-frequency resource location of the CG type 1, a periodicity of CG resources, a quantity of hybrid automatic repeat request (hybrid automatic repeat request, HARQ) processes using CG resources, and a modulation and coding scheme (modulation and coding scheme, MCS) may be provided by a network device for the terminal device by using RRC signaling. After receiving the RRC signaling, the terminal device stores the parameters for a configured uplink grant (configured uplink grant), so that the terminal device can periodically use the CG to perform uplink data transmission. When a base station allocates a radio resource to a terminal device by using the CG type 2, parameters such as a periodicity of CG resources of the CG type 2 and a quantity of HARQ processes using CG resources may be provided by a network device for the terminal device by using RRC signaling. Parameters such as a time-frequency resource location of the CG type 2 and an MCS may be provided by the network device for the terminal device by using DCI, and the terminal stores the parameters for a configured uplink grant. To be specific, the CG type 2 may be activated or deactivated by using physical layer (physical layer, PHY) signaling. When the network device activates the CG type 2 by using the DCI, the time-frequency resource location may be provided by the network device for the terminal device by using the DCI, and the terminal stores the time-frequency resource location for a configured uplink grant, so that the terminal can periodically use the configured grant to perform uplink data transmission.

When the CG is running, after a CG or a DG transmits data by using a specific HARQ process, UE may start a configured grant timer (configuredGrantTimer) for the HARQ process. During the running of the timer, another CG cannot use the HARQ process anymore.

A size of resources used for CG transmission is fixed in a currently supported CG configuration. For an XR service, a frame size is not fixed, that is, an amount of data that needs to be transmitted by the UE in each periodicity is not the same all the time. If a CG with fixed resources is used, the CG resources may be greater than or less than resources required for an actual amount of to-be-transmitted data, causing a waste of resources or delayed data transmission. As shown in FIG. 4, currently, in 3GPP specifications, a plurality of CG physical uplink shared channel (Physical Uplink Shared CHannel, PUSCH) resources can be configured in one CG periodicity, that is, the plurality of CG transmission resources may exist in one CG periodicity, where each CG transmission resource corresponds to one CG transmission occasion (CG occasion). In this way, the enhanced CG may be used to resolve the problem that a frame size of an XR service is not fixed, and UE may occupy a proper quantity of CG occasions based on an actual amount of data. However, in a process of using the foregoing enhanced CG technology, it is not clear about how the UE determines CG transmission resources corresponding to specific CG occasions that are used or not used, and how to process the CG occasions that are not used. If the specific CG occasions that are not used are not clear, even if there are finally CG occasions not used, the base station cannot reallocate resources corresponding to the CG occasions to another user in advance, causing a waste of the resources corresponding to the CG occasions.

Embodiments of this application provide an information transmission method and apparatus. A terminal device may determine, in one CG periodicity, whether to use or not use a plurality of CG transmission resources, and report the foregoing case to a network device, so that the network device allocates a CG transmission resource that is not used to another terminal device, to avoid a waste of resources.

It should be understood that, in embodiments of this application, steps performed by the terminal device and/or the network device may be performed by a module or a unit in the terminal device and/or the network device, for example, performed by a chip in the terminal device or the network device.

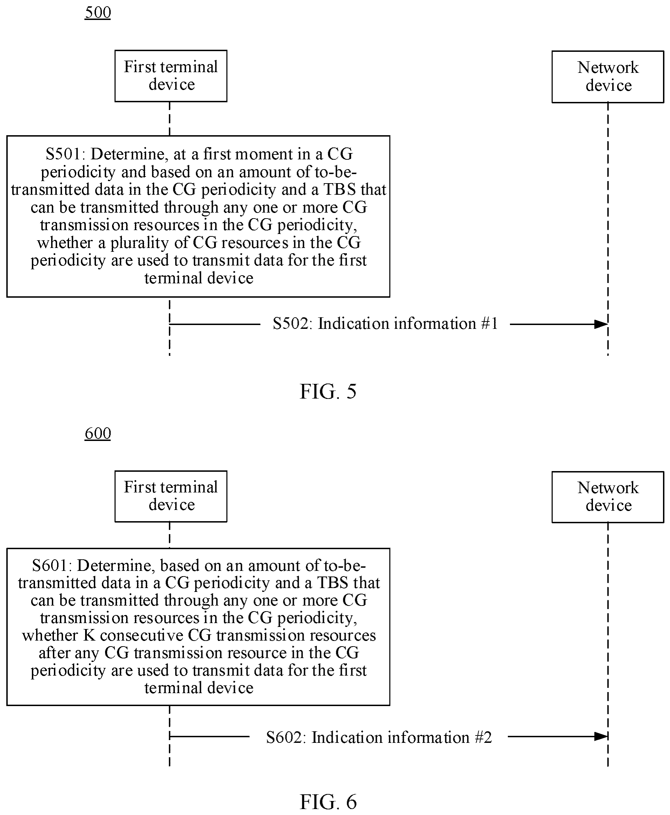

FIG. 5 is a schematic flowchart of an information transmission method according to an embodiment of this application. The method 500 may include the following steps.

S501: A first terminal device determines, at a first moment in a CG periodicity and based on an amount of to-be-transmitted data in the CG periodicity and a TBS that can be transmitted through any one or more CG transmission resources in the CG periodicity, whether a plurality of CG resources in the CG periodicity are used to transmit data for the first terminal device.

Optionally, transport block sizes TBSs that can be transmitted by using the plurality of CG transmission resources in the CG periodicity may be the same or different.

In an embodiment, the first moment may include a moment at which the first terminal device processes a 1st CG transmission resource in the CG periodicity; a moment at which the to-be-transmitted data in the CG periodicity arrives at an access stratum of the first terminal device; or a moment at which the first terminal device determines the amount of to-be-transmitted data in the CG periodicity. In this way, the first terminal device may determine, in each CG periodicity in one CG configuration, whether to use or not use a plurality of CG transmission resources, and report the foregoing case to the network device.

Optionally, that the first terminal device processes the CG transmission resource may indicate that a MAC layer of the first terminal device processes a configured grant associated with the CG transmission resource, or indicate that a MAC layer of the first terminal device generates a MAC PDU for the CG transmission resource.

Optionally, that the to-be-transmitted data in the CG periodicity arrives at the access stratum of the first terminal device may include that the to-be-transmitted data arrives for the first time, a part of the to-be-transmitted data arrives, or all of the to-be-transmitted data arrives. The moment at which the to-be-transmitted data arrives at the access stratum of the first terminal device may include a moment at which each piece of the to-be-transmitted data arrives or a moment at which a tail packet of the to-be-transmitted data arrives.

Optionally, the first terminal device may determine the amount of to-be-transmitted data in the CG periodicity according to an indication of an application layer or based on information carried in a packet header.

For example, when TBSs that can be transmitted by using a plurality of CG transmission resources in the CG periodicity are different, the first terminal device may determine, in the following manner, the quantity of CG transmission resources used or not used to transmit the data for the first terminal device. When an amount of to-be-transmitted data in a CG periodicity is greater than a sum of TBSs that can be transmitted through first X CG transmission resources in the CG periodicity, and is less than or equal to a sum of TBSs that can be transmitted through first X+1 CG transmission resources in the CG periodicity, the first terminal device determines that the quantity of CG transmission resources used to transmit the data in the CG periodicity is X+1, or the first terminal device determines that the quantity of CG transmission resources that are not used to transmit the data in the CG periodicity is L-X-1, where L is a total quantity of CG transmission resources in the CG periodicity, and X is a non-negative integer.

For example, when TBSs that can be transmitted by using a plurality of CG transmission resources in the CG periodicity are the same, the first terminal device may determine, according to the following formula, a quantity of CG transmission resources used to transmit the data for the first terminal device:

$$M = \lceil (\frac{A}{B}) \rceil$$

or the first terminal device may determine, according to the following formula, a quantity of CG transmission resources that are not used to transmit the data for the first terminal device:

$$N = \lfloor (L - \frac{A}{B}) \rfloor$$

where M is the quantity of CG transmission resources used to transmit the data for the first terminal device, N is the quantity of CG transmission resources that are not used to transmit the data for the first terminal device, L is a total quantity of CG transmission resources in the CG periodicity, A is the amount of to-be-transmitted data in the CG periodicity, B is a TBS that can be transmitted through any CG resource in the CG periodicity, $\lceil \ \rceil$ is rounding up, and $\lfloor \ \rfloor$ is rounding down.

For example, if A is 100 bytes, and B is 50 bytes, M=2. In this case, two CG transmission resources are used to transmit the data for the first terminal device.

For another example, if A is 100 bytes, B is 50 bytes, and L=5, N=3. In this case, three CG transmission resources are not used to transmit the data for the first terminal device.

In the foregoing two formulas, the amount of to-be-transmitted data in the CG periodicity may be a total amount of transmitted data from all LCHs that can be mapped to the CG configuration in one CG periodicity.

It should be understood that, because the TBSs that can be transmitted by using the plurality of CG transmission resources in the CG periodicity are the same, a TBS that can be transmitted through any CG resource in the CG periodicity may alternatively be replaced with a TBS that can be transmitted by using each CG resource.

In an embodiment, the first moment may include a moment at which the first terminal device processes each CG transmission resource in the CG periodicity. In this way, the terminal device can perform calculation a plurality of times in one periodicity, to obtain a more accurate calculation result.

Optionally, in step S501, the first terminal device may determine, based on the amount of to-be-transmitted data, the TBS that can be transmitted through any one or more CG transmission resources, and a quantity of CG transmission resources that have been used in the CG periodicity, whether the plurality of CG transmission resources are used to transmit the data for the first terminal device.

For example, the first terminal device may determine, in the following manner, the quantity of CG transmission resources used or not used to transmit the data for the first terminal device. When an amount of to-be-transmitted data in a CG periodicity is greater than a sum of TBSs that can be transmitted through first Y CG transmission resources in the CG transmission resources that have not been used in the current CG periodicity, and is less than or equal to a sum of TBSs that can be transmitted through first Y+1 CG transmission resources in the CG transmission resources that have not been used in the current CG periodicity, the first terminal device determines that a quantity of CG transmission resources used to transmit the data in the CG periodicity is i+Y+1, or the first terminal device determines that the quantity of CG transmission resources that are not used to transmit the data in the CG periodicity is L-i-Y-1, where i is a quantity of CG transmission resources that have been used in the CG periodicity, L is a total quantity of CG transmission resources in the CG periodicity, and Y is a non-negative integer.

For example, when TBSs that can be transmitted by using a plurality of CG transmission resources in the CG periodicity are the same, the first terminal device may determine, according to the following formula, a quantity of CG transmission resources used to transmit the data for the first terminal device:

$$M = \lceil (i + \frac{A}{B}) \rceil$$

or the first terminal device may determine, according to the following formula, a quantity of CG transmission resources that are not used to transmit the data for the first terminal device:

$$N = \lfloor (L - i - \frac{A}{B}) \rfloor$$

where M is the quantity of CG transmission resources used to transmit the data for the first terminal device, N is the quantity of CG transmission resources that are not used to transmit the data for the first terminal device, L is a total quantity of CG transmission resources in the CG periodicity, i is the quantity of CG transmission resources that have been used, A is the amount of to-be-transmitted data in the CG periodicity, B is a TBS that can be transmitted through any CG resource in the CG periodicity, $\lceil \ \rceil$ is rounding up, and $\lfloor \ \rfloor$ is rounding down.

For example, if A is 100 bytes, B is 50 bytes, and i is 2, M=4. In this case, four CG transmission resources are used to transmit the data for the first terminal device.

For another example, if A is 100 bytes, B is 50 bytes, i is 2, and L=5, N=1. In this case, one CG transmission resource is not used to transmit the data for the first terminal device.

In the foregoing two formulas, the amount of to-be-transmitted data in the CG periodicity may be an amount of remaining to-be-transmitted data from all LCHs that can be mapped to the CG configuration in the CG periodicity when each CG occasion is processed.

In an embodiment, because the amount of to-be-transmitted data may include other additional information such as a MAC packet header and a MAC CE, in step S501, the first terminal device may determine, based on the amount of to-be-transmitted data, the TBS that can be transmitted through any one or more CG transmission resources, and a preset factor, whether the plurality of CG transmission resources are used to transmit the data for the first terminal device. In this way, the terminal device may estimate, in a process of calculating whether the plurality of CG transmission resources are used or not used, the other additional information that may exist, and consider the other additional information into the amount of to-be-transmitted data, to avoid insufficient CG transmission resources used in final calculation.

Optionally, the preset factor is predefined or configured by the network device, and the preset factor is associated with an amount of data in a medium access control MAC packet header and/or a medium access control control element MAC CE in the to-be-transmitted data.

S502: The first terminal device sends indication information #1 to the network device.

The indication information #1 indicates whether the plurality of CG resources in the CG periodicity are used to transmit the data for the first terminal device.

Optionally, the indication information #1 may further indicate a quantity of CG resources used or not used by the first terminal device, and/or the indication information may further indicate sequence numbers of the CG resources used or not used by the first terminal device.

Optionally, when the indication information #1 indicates that the plurality of CG transmission resources are not used to transmit the data for the first terminal device, after receiving the indication information #1, the network device may prohibit data transmission with the first terminal device on the plurality of CG resources.

Optionally, when the indication information #1 indicates that the plurality of CG transmission resources are not used to transmit the data for the first terminal device, after receiving the indication information #1, the network device may allocate the plurality of CG resources to another terminal device.

Alternatively, after learning of the total quantity of CG transmission resources and the quantity of CG transmission resources used by the first terminal device, the network device may infer a quantity of CG transmission resources that are not used by the first terminal

In this embodiment of this application, the first terminal device may determine, in each CG periodicity, whether to use or not use a plurality of CG transmission resources, and report the foregoing case to the network device, so that the network device allocates a CG transmission resource that is not used to another terminal device, to avoid a waste of resources.

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

FIG. 6 is a schematic flowchart of another information transmission method according to an embodiment of this application. The method 600 may include the following steps.

S601: A first terminal device determines, based on an amount of to-be-transmitted data in a CG periodicity and a TBS that can be transmitted through any one or more CG transmission resources in the CG periodicity, whether K consecutive CG transmission resources after one CG transmission resource in the CG periodicity are used to transmit data for the first terminal device.

Optionally, K may be predefined or configured by a network device, and K is a positive integer.

In an embodiment, in step S601, when the amount of to-be-transmitted data is greater than or equal to a first value, the first terminal device determines that all of the K CG transmission resources are used to transmit the data for the first terminal device; or when the amount of to-be-transmitted data is less than a first value, the first terminal device determines that not all of the K CG transmission resources are used to transmit the data for the first terminal device, where when all of the CG transmission resources are the same, the first value may be a product of K and a TBS that can be transmitted through any CG transmission resource (or each CG transmission resource). When all of the CG transmission resources are different, the first value may be a sum of TBSs that can be transmitted through the K consecutive CG transmission resources.

S602: The first terminal device sends indication information #2 to the network device.

The indication information #2 indicates whether the K consecutive CG resources after one CG transmission resource in the CG periodicity are used to transmit the data for the first terminal device.

Optionally, the indication information #2 may further indicate whether all or some of the K CG transmission resources are used to transmit the data for the first terminal device, and/or indicate a quantity of CG resources used or not used by the first terminal device in the K CG transmission resources, and/or indicate a sequence number of CG resources used or not used by the first terminal device in the K CG transmission resources.

Optionally, when the indication information #2 indicates that the K consecutive CG resources after any CG transmission resource in the CG periodicity are not used to transmit the data for the first terminal device, after receiving the indication information #2, the network device may prohibit the first terminal device from transmitting the data on the K CG resources.

Optionally, when the indication information #2 indicates that the K consecutive CG resources after any CG transmission resource in the CG periodicity are not used to transmit the data for the first terminal device, after receiving the indication information #2, the network device may allocate the K CG resources to another terminal device.

In this embodiment of this application, the first terminal device may determine whether the K consecutive CG resources after one CG transmission resource in the CG periodicity are used to transmit the data for the first terminal device. In this way, a quantity of CG transmission resources that are finally used or not used do not need to be directly calculated, and a problem that a calculation result is inaccurate due to an unstable amount of to-be-transmitted data can be resolved.

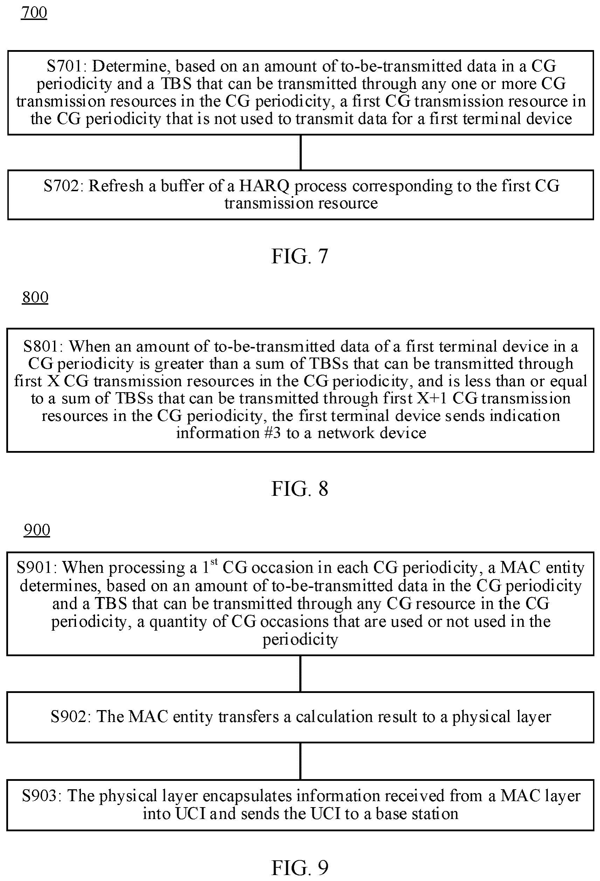

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment. FIG. 7 is a schematic flowchart of another information transmission method according to an embodiment of this application. The method 700 may include the following steps.

S701: A first terminal device determines, based on an amount of to-be-transmitted data in a CG periodicity and a TBS that can be transmitted through any one or more CG transmission resources in the CG periodicity, a first CG transmission resource in the CG periodicity that is not used to transmit data for the first terminal device.

S702: The first terminal device refreshes a buffer of a HARQ process corresponding to the first CG transmission resource.

Optionally, in step S702, when a configured grant timer corresponding to the HARQ process is not running, the first terminal device may refresh buffers of HARQ processes corresponding to the plurality of CG resources.

After a CG transmission resource transmits the data by using a specific HARQ process, the terminal device may start a configured grant timer for the HARQ process. When the timer runs, another CG transmission resource cannot use the HARQ process.

In this embodiment of this application, after determining the first CG transmission resource that is not used to transmit the data for the first terminal device, the first terminal device may refresh the buffer of the HARQ process corresponding to the first CG resource. In this way, the network device can be prevented from scheduling retransmission by mistake because the network device considers that the first CG transmission resource is used. Consequently, the first terminal device sends buffered data in the buffer of the HARQ process to the network device, and the network device performs unnecessary processing.

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

FIG. 8 is a schematic flowchart of another information transmission method according to an embodiment of this application. The method 800 may include the following steps.

S801: When an amount of to-be-transmitted data of a first terminal device in a CG periodicity is greater than a sum of TBSs that can be transmitted through first X CG transmission resources in the CG periodicity, and is less than or equal to a sum of TBSs that can be transmitted through first X+1 CG transmission resources in the CG periodicity, the first terminal device sends indication information #3 to a network device.

The indication information #3 indicates the first terminal device to use first M CG transmission resources in the CG periodicity, or the indication information #3 indicates the first terminal device not to use last N CG transmission resources in the CG periodicity, where X is a non-negative integer, M is greater than or equal to X+1 and less than or equal to L, N is greater than or equal to 0 and less than or equal to L-X-1, and L is a total quantity of CG transmission resources in the CG periodicity.

The amount of to-be-transmitted data in the CG periodicity may be a total amount of transmitted data from all LCHs that can be mapped to the CG configuration in one CG periodicity.

Optionally, when the indication information #3 indicates the first terminal device not to use the last N CG transmission resources in the CG periodicity, after receiving the indication information #3, the network device may prohibit the first terminal device from transmitting the data on the last N CG transmission resources.

Optionally, when the indication information #3 indicates the first terminal device not to use the last N CG transmission resources in the CG periodicity, after receiving the indication information #3, the network device may allocate the last N CG transmission resources in the CG periodicity to another terminal device.

In this embodiment of this application, when the amount of to-be-transmitted data of the first terminal device meets a specific condition, the first terminal device reports, to the network device, a usage status of the CG transmission resources in the CG periodicity, so that the network device allocates a CG transmission resource that is not used to another terminal device, to avoid a waste of resources.

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment. FIG. 9 is a schematic flowchart of another information transmission method according to an embodiment of this application. The method 900 may be a detailed description of the method 500, and the method 900 may be performed by UE.

A base station may indicate the UE in an explicit or implicit manner by using RRC signaling. For a specific CG configuration, the UE may calculate and feed back a CG occasion that is not used. For example, the base station may carry indication information in an information element in the CG configuration for explicit indication. For the CG configuration that is explicitly indicated, the UE may feed back a CG occasion that is not used. For another example, when the base station configures a CG to support a plurality of CG occasions in a single periodicity, the base station implicitly indicates that the UE should feed back a CG occasion that is not used for the CG. The base station may be the network device in the method 500, the UE may be the first terminal device in the method 500, and the CG occasion that is used or not used may indicate whether the CG transmission resource corresponding to the CG occasion in the method 500 is used to transmit the data for the first terminal device.

For the CG configuration, if the base station configures that the UE needs to feed back the CG occasion that is not used, the UE may calculate, at the beginning of each CG periodicity, a quantity of CG occasions that do not need to be used. A specific calculation process may be shown in FIG. 9, and the method 900 may include the following steps. S901: When processing a 1st CG occasion in each CG periodicity, a MAC entity determines, based on an amount of to-be-transmitted data in the CG periodicity and a transport block size (transport block size, TBS) that can be transmitted through any CG resource in the CG periodicity, a quantity of CG occasions that are used or not used in the periodicity. The 1st CG occasion in the CG periodicity may be processed at the first moment in the method 500.

In an embodiment, the MAC entity may calculate, according to the following formula, a quantity of CG occasions that need to be used in the CG periodicity:

$$M = \lceil (\frac{A}{B}) \rceil$$

The MAC entity may calculate, according to the following formula, a quantity of CG occasions that are not used in the CG periodicity:

$$N = \lfloor (L - \frac{A}{B}) \rfloor$$

where M is the quantity of CG occasions used in the CG periodicity, N is the quantity of CG occasions that are not used in the CG periodicity, A is the amount of to-be-transmitted data in the CG periodicity, B is a TBS that can be transmitted through any CG resource in the CG periodicity, L may indicate a total quantity of CG occasions configured in one CG periodicity, the amount of to-be-transmitted data may include data from all logical channels (logical channel, LCH) that can be mapped to the CG configuration, $\lceil \rceil$ is rounding up, for example, $\lceil 1.5 \rceil = 2$, and $\lfloor \rfloor$ is rounding down, for example, $\lfloor 1.5 \rfloor = 1$.

It should be understood that, the quantity of CG occasions used/not used in the CG periodicity may be understood as a quantity of CG resources used/not used to transmit the data for the UE, and the total quantity of CG occasions configured in the CG periodicity may alternatively be understood as a total quantity of CG transmission resources in the CG periodicity.

In an embodiment, the amount of to-be-transmitted data may include additional information such as a packet header (for example, a MAC header) and a medium access control control element (medium access control control element, MAC CE). The UE may estimate, in the foregoing calculation process, the existing additional information, and consider the additional information in the amount of to-be-transmitted data, to avoid insufficient resources used in final calculation.

Optionally, the UE may calculate values of M and N according to the following formulas:

$$M = \lceil \left(\frac{A}{B} * \text{factor}\right) \rceil$$

$$N = \lfloor (L - \frac{A}{B} * \text{factor}) \rfloor$$

In the foregoing two formulas, the factor may be a number greater than 1 (for example, 1.1), and is used to represent that the existing additional information is considered. The factor may be the preset factor in the method 500. Optionally, the factor may be predefined or configured by the base station for the UE.

Optionally, a calculation result obtained when the MAC entity calculates the quantity of CG occasions may be greater than or equal to 0, or less than or equal to the total quantity of CG occasions. The result may be represented by the following formula:

$$M = \min \{L, \lceil (\frac{A}{B}) \rceil\}$$

$$N = \max \{0, \lfloor (L - \frac{A}{B}) \rfloor\}$$

or

$$M = \min \{L, \lceil \left(\frac{A}{B} * \text{factor}\right) \rceil\}$$

$$N = \max \{0, \lfloor (L - \frac{A}{B} * \text{factor}) \rfloor\}$$

In an embodiment, considering that jitter may exist when data arrives at a base station, or data in one CG periodicity may arrive continuously, step S901 may include: in each CG periodicity, when the data arrives at an LCH, or when the UE detects that a tail packet of the data in the periodicity has arrived at an LCH, or when the UE learns of an amount of data in the periodicity according to an upper-layer indication or packet detection, the MAC entity performs calculation, to determine the quantity of CG occasions used or not used in the CG periodicity.

Optionally, that the tail packet of the packet in the periodicity arrives at the LCH may be detected in the following manner: the packet that carries an identifier of the tail packet is detected to arrive at the LCH, or no new packet is detected to arrive at the logical channel within a period of time.

It should be understood that, the foregoing formula in the method 900 may be applicable to a case in which TBSs that can be transmitted by using each CG transmission resource are the same.

In an embodiment, if TBSs that can be transmitted by using each CG transmission resource are different, the UE may determine, in the following manner, the quantity of CG occasions that are used or not used. When an amount of to-be-transmitted data in a CG periodicity is greater than a sum of TBSs that can be transmitted through first X CG transmission resources in the CG periodicity, and is less than or equal to a sum of TBSs that can be transmitted through first X+1 CG transmission resources in the CG periodicity, the UE determines that the quantity of CG occasions used in the CG periodicity is X+1, or the UE determines that the quantity of CG occasions that are not used in the CG periodicity is L-X-1, where L is a total quantity of CG transmission resources in the CG periodicity, and X is a non-negative integer.

S902: The MAC entity transfers a calculation result (M or N) to a physical layer (PHY layer).

For example, the MAC entity may introduce a new inter-layer interaction process to transfer the calculation result to the physical layer, or the MAC entity may reuse an existing inter-layer interaction process, for example, to transfer the calculation result and information such as a HARQ corresponding to the 1st CG occasion and the MAC PDU to the physical layer.

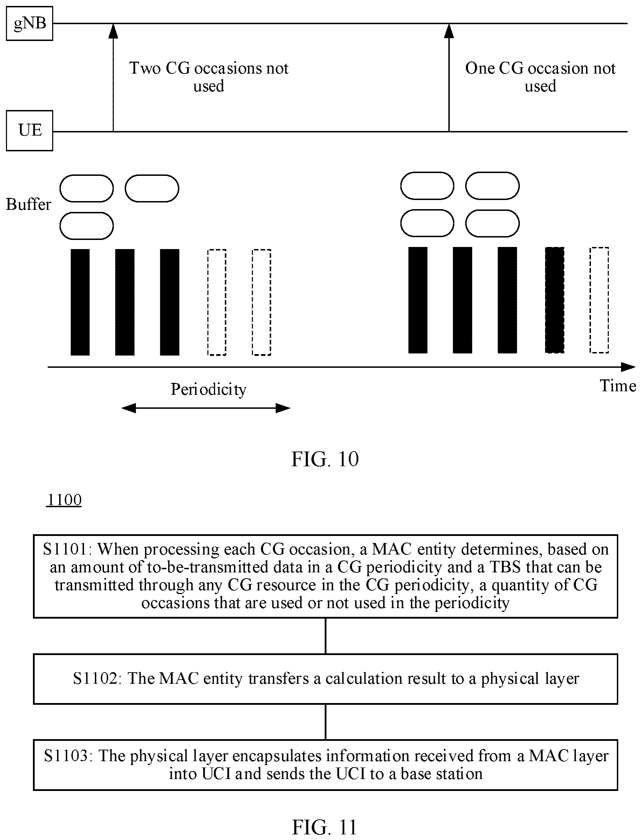

S903: The physical layer encapsulates information received from the MAC layer into uplink control information (uplink control information, UCI) and sends the UCI to the base station. For example, as shown in FIG. 10, UE reports two CG occasions that are not used to a base station in a 1st CG periodicity, and the UE reports one CG occasion that is not used to the base station in a second CG periodicity.

For example, the physical layer may directly carry M or N in the UCI, or indicate, in the UCI, a start point of a CG occasion that is not used (for example, there are a total of five occasions in one CG periodicity, the MAC layer calculates that N=2, and the physical layer may indicate 4 in the UCI, indicating that the CG occasion that is not used starts from a fourth CG occasion), or the physical layer may carry a bitmap (bitmap) in the UCI to indicate a specific CG occasion that is not used. For example, there are a total of five CG occasions in one periodicity, and (11100) indicated in the bitmap are used to identify the usage of the five occasions. To be specific, 1 indicates that the CG occasion is used, and 0 indicates that the CG occasion is not used.

For example, the physical layer may carry CG-UCI on a PUSCH sent on a 1st CG occasion, where the CG-UCI includes the foregoing information (that is, the UCI carries M or N, or the UCI indicates the start point of the CG occasion that is not used, or the UCI carries the bitmap); or the physical layer may carry CG-UCI on a PUSCH sent on each CG occasion, where the CG-UCI includes the foregoing information; or the physical layer may carry CG-UCI on a PUSCH sent on some CG occasions (for example, at an interval of two CG occasions), where the CG-UCI includes the foregoing information; or the physical layer may send the UCI on a PUCCH for one or more times, where the UCI includes the foregoing information; or if the CG is covered due to a conflict between dynamic scheduling and the CG, the physical layer may carry the UCI on a PUSCH corresponding to the dynamic scheduling, where the UCI includes the foregoing information; or the physical layer may send the UCI on a physical uplink control channel (physical uplink control channel, PUCCH), where the UCI includes the foregoing information. If the physical layer does not receive the indication information from the MAC layer, it is considered that N=0, that is, there is no CG occasion that is not used. In this case, the physical layer may indicate N=0 in the UCI, or do not send the UCI to the base station.

It should be understood that, the foregoing specific manner and occasion of reporting the UCI by the physical layer to the base station are merely examples for descriptions, and should not be construed as a limitation on this embodiment of this application.

In an embodiment, step S902 and step S903 may alternatively be replaced with that the physical layer uses a MAC CE to report related information to the base station.

For example, after obtaining the calculation result, the MAC entity may not indicate the physical layer, but directly use the MAC CE to report the information to the base station. A manner of reporting the information may be the same as the foregoing manner of reporting the UCI. Details are not described herein again. In this case, the MAC entity does not need to notify the physical layer, and the physical layer does not need to report the UCI information to the base station. In this case, signaling overheads may be reduced.

In another embodiment, the UE reports the amount of transmitted data in the CG periodicity to the base station, so that the base station determines, based on the amount of data reported by the UE, a quantity of CG occasions that are not used in the CG periodicity.

For example, in each CG periodicity, the UE may indicate, to the base station by using the MAC CE or the UCI, the amount of to-be-transmitted data in the periodicity.

Optionally, when processing a 1st CG occasion, or when the data arrives at an LCH, or when the UE detects that a tail packet of the data in the periodicity has arrived at an LCH, or when the UE learns of an amount of data in the current periodicity according to an upper-layer indication or packet detection, the UE may indicate, to the base station, the amount of transmitted data in the current periodicity. In this way, the base station can infer, based on the amount of data reported by the UE, a quantity of CG occasions that are not used in the periodicity, so that the base station can schedule the CG resources to another user, to avoid a waste of resources.

Optionally, the base station may send a skip indication (for example, a MAC CE or DCI) to the UE, to indicate a specific CG occasion that cannot be used by the UE in the current periodicity. A specific manner of the skip indication may be the same as the foregoing manner of reporting the UCI. Details are not described herein again. In this implementation, the UE does not need to actively calculate the usage of the CG occasion, but the UE reports the amount of data to the base station, and the base station undertakes a calculation task and indicates the usage of the CG occasion. In this way, calculation burden of the UE may be reduced.

Optionally, it may be preset that the UE does not report the calculation result to the base station when the quantity of CG occasions that are not used and that are calculated by the UE is less than a threshold, and the foregoing determining step may be performed at the MAC layer or the physical layer.

For example, if determining is performed at the MAC layer, when the MAC entity calculates that M>L-threshold or N<threshold, the MAC entity may indicate M=L or N=0 to the physical layer, or the MAC entity does not provide any indication to the physical layer. Further, when the physical layer receives the indication or does not receive the indication, the physical layer may not send the UCI to the base station; or the MAC layer does not send the MAC CE. For another example, if determining is performed at the physical layer, when the physical layer receives the indication information from the MAC, and the indication information indicates that M>L-threshold or N<threshold, the physical layer may not send the UCI to the base station.

It should be understood that, the threshold may be predefined, or may be configured and delivered by the base station. In this implementation, when a few CG resources are not used, the UE or the physical layer may not report related information to the base station, to reduce signaling overheads.

FIG. 11 is a schematic flowchart of another information transmission method according to an embodiment of this application. The method 1100 may be a detailed description of the method 500, and the method 1100 may be performed by UE.

When data in a periodicity continuously arrives at a MAC layer and lasts for a period of time, it may be inaccurate to calculate a CG occasion once at the beginning of the CG periodicity by using the method 900. Therefore, the foregoing problem may be resolved by using the method 1100.

A base station may indicate the UE in an explicit or implicit manner by using RRC signaling. For a specific CG configuration, the UE may calculate and feed back a CG occasion that is not used. For example, the base station may carry indication information in an information element in the CG configuration for explicit indication. For the CG configuration that is explicitly indicated, the UE may feed back a CG occasion that is not used. For another example, when the base station configures a CG to support a plurality of CG occasions in a single periodicity, the base station implicitly indicates that the UE should feed back a CG occasion that is not used for the CG. The base station may be the network device in the method 500, the UE may be the first terminal device in the method 500, and the CG occasion that is used or not used may indicate whether the CG transmission resource corresponding to the CG occasion in the method 500 is used to transmit the data for the first terminal device.

For the CG configuration, if the base station configures that the UE needs to feed back the CG occasion that is not used, the UE may calculate, on each CG occasion, a quantity of CG occasions that do not need to be used in the CG periodicity. A specific calculation process may be shown in FIG. 11, and the method 1100 may include the following steps.

S1101: When processing each CG occasion, a MAC entity determines, based on an amount of to-be-transmitted data in a CG periodicity and a TBS that can be transmitted through any CG resource in the CG periodicity, a quantity of CG occasions that are used or not used in the periodicity. Each CG occasion may be processed at the first moment in the method 500.

In an embodiment, the MAC entity may calculate, according to the following formula, a quantity of CG occasions that need to be used in the CG periodicity:

$$M = \lceil (i + \frac{A}{B}) \rceil$$

The MAC entity may calculate, according to the following formula, a quantity of CG occasions that are not used in the CG periodicity:

$$N = \lfloor (L - i - \frac{A}{B}) \rfloor$$

where M is the quantity of CG occasions used in the CG periodicity, N is the quantity of CG occasions that are not used in the CG periodicity, A is the amount of to-be-transmitted data in the CG periodicity, B is a TBS that can be transmitted through any CG resource in the CG periodicity, L may indicate a total quantity of CG occasions configured in one CG periodicity, i is the quantity of CG transmission resources that have been used, the amount of to-be-transmitted data may include data from all LCHs that can be mapped to the CG configuration, where the data that has been sent by the terminal device should be deducted from the amount of to-be-transmitted data, $\lceil \rceil$ is rounding up, for example, [1.5]=2, and $\lfloor \rfloor$ is rounding down, for example, $\lfloor 1.5 \rfloor = 1$.

For example, if A is 100 bytes, B is 50 bytes, and i is 2 during calculation on a third CG occasion in the periodicity, M=4. In this case, four CG transmission resources are used to transmit the data for the first terminal device.

For another example, if A is 100 bytes, B is 50 bytes, i is 2 during calculation on a third CG occasion in the periodicity, and L=5, N=1. In this case, one CG transmission resource is not used to transmit the data for the first terminal device. It should be understood that, the quantity of CG occasions used/not used in the CG periodicity may be understood as a quantity of CG resources used/not used to transmit the data for the UE, and the total quantity of CG occasions configured in the CG periodicity may alternatively be understood as a total quantity of CG transmission resources in the CG periodicity.

In an embodiment, the amount of to-be-transmitted data may include additional information such as a packet header (for example, a MAC header) and a MAC CE. The UE may estimate, in the foregoing calculation process, the existing additional information, and consider the additional information in the amount of to-be-transmitted data, to avoid insufficient resources used in final calculation.

Optionally, the UE may calculate values of M and N according to the following formulas:

$$M = \lceil \left( i + \frac{A}{B} * \text{factor} \right) \rceil$$

$$N = \lfloor (L - i - \frac{A}{B} * \text{factor}) \rfloor$$

In the foregoing two formulas, the factor may be a number greater than 1 (for example, 1.1), and is used to represent that the existing additional information is considered. The factor may be the preset factor in the method 500. Optionally, a calculation result obtained when the MAC entity calculates the quantity of CG occasions may be greater than or equal to 0, or less than or equal to the total quantity of CG occasions. The result may be represented by the following formula:

$$M = \min \{L, \lceil (i + \frac{A}{B}) \rceil\}$$

$$N = \max \{0, \lfloor (L - i - \frac{A}{B}) \rfloor\}$$

or

$$M = \min \{L, \lceil \left( i + \frac{A}{B} * factor \right) \rceil\}$$

$$N = \max \{0, \lfloor (L - i - \frac{A}{B} * factor) \rfloor\}$$

Optionally, when the MAC entity cannot determine the amount of to-be-transmitted data in the periodicity, for example, when not all the data arrives at the LCH, the MAC entity may indicate M=L or N=0 to the physical layer, or does not indicate any information to the physical layer.

Optionally, that the tail packet of the packet in the periodicity arrives at the LCH may be detected in the following manner: the packet that carries an identifier of the tail packet is detected to arrive at the LCH, or no new packet arrives at the logical channel within a period of time.

It should be understood that, the foregoing formula in the method 1100 may be applicable to a case in which TBSs that can be transmitted by using each CG transmission resource are the same.

In an embodiment, if TBSs that can be transmitted by using ach CG transmission resource are different, the UE may determine, in the following manner, the quantity of CG occasions that are used or not used. When an amount of to-be-transmitted data in a CG periodicity is greater than a sum of TBSs that can be transmitted through first X CG transmission resources in the CG periodicity, and is less than or equal to a sum of TBSs that can be transmitted through first X+1 CG transmission resources in the CG periodicity, the UE determines that the quantity of CG occasions used in the CG periodicity is X+1, or the UE determines that the quantity of CG occasions that are not used in the CG periodicity is L-X-1, where L is a total quantity of CG transmission resources in the CG periodicity, and X is a non-negative integer.

S1102: The MAC entity transfers a calculation result (M or N) to a physical layer (PHY layer).

For example, the MAC entity may introduce a new inter-layer interaction process to transfer the calculation result to the physical layer, or the MAC entity may reuse an existing inter-layer interaction process, for example, to transfer the calculation result and information such as a HARQ corresponding to any CG occasion and the MAC PDU to the physical layer.

S1103: The physical layer encapsulates information received from the MAC layer into UCI and sends the UCI to the base station.

For example, the physical layer may directly carry M or N in the UCI, or indicate, in the UCI, a start point of a CG occasion that is not used (for example, there are a total of five occasions in one CG periodicity, the MAC layer calculates that N=2, and the physical layer may indicate 4 in the UCI, indicating that the CG occasion that is not used starts from a fourth CG occasion), or the physical layer may carry a bitmap (bitmap) in the UCI to indicate a specific CG occasion that is not used. For example, there are a total of five CG occasions in one periodicity, and (11100) indicated in the bitmap are used to identify the usage of the five occasions. To be specific, 1 indicates that the CG occasion is used, and 0 indicates that the CG occasion is not used.

For example, the physical layer may carry CG-UCI on a PUSCH sent on each CG occasion, where the CG-UCI includes latest information indicated by the MAC layer. Alternatively, the physical layer may carry CG-UCI on a PUSCH sent on some CG occasions (for example, at an interval of two CG occasions), where the CG-UCI includes latest information indicated by the MAC layer; or the physical layer may send the UCI on a PUCCH for one or more times, where the UCI includes latest information indicated by the MAC layer; or if the CG is covered due to a conflict between dynamic scheduling and the CG, the physical layer may carry the UCI on a PUSCH corresponding to the dynamic scheduling, where the UCI includes latest information indicated by the MAC layer; or the physical layer may send the UCI on a PUCCH, where the UCI includes the foregoing information. If the physical layer does not receive the indication information from the MAC layer, it is considered that N=0, that is, there is no CG occasion that is not used. In this case, the physical layer may indicate N=0 in the UCI, or do not send the UCI to the base station.

It should be understood that, the foregoing specific manner and occasion of reporting the UCI by the physical layer to the base station are merely examples for descriptions, and should not be construed as a limitation on this embodiment of this application.

In an embodiment, step S1102 and step S1103 may alternatively be replaced with that the physical layer uses a MAC CE to report related information to the base station.

For example, after obtaining the calculation result, the MAC entity may not indicate the physical layer, but directly use the MAC CE to report the information to the base station. A manner of reporting the information may be the same as the foregoing manner of reporting the UCI. Details are not described herein again. In this case, the MAC entity does not need to notify the physical layer, and the physical layer does not need to report the UCI information to the base station. In this case, signaling overheads may be reduced.

Optionally, it may be preset that the UE does not report the calculation result to the base station when the quantity of CG occasions that are not used and that are calculated by the UE is less than a threshold, and the foregoing determining step may be performed at the MAC layer or the physical layer.

For example, if determining is performed at the MAC layer, when the MAC entity calculates that M>L-threshold or N<threshold, the MAC entity may indicate M=L or N=0 to the physical layer, or the MAC entity does not provide any indication to the physical layer. Further, when the physical layer receives the indication or does not receive the indication, the physical layer may not send the UCI to the base station; or the MAC layer does not send the MAC CE. For another example, if determining is performed at the physical layer, when the physical layer receives the indication information from the MAC, and the indication information indicates that M>L-threshold or N<threshold, the physical layer may not send the UCI to the base station.

It should be understood that, the threshold may be predefined, or may be configured and delivered by the base station. In this implementation, when a few CG resources are not used, the UE or the physical layer may not report related information to the base station, to reduce signaling overheads.

Optionally, when the UE cannot determine the amount of to-be-transmitted data in the current periodicity, the UE may first report a conservative result. For example, as shown in FIG. 10, not all of the data arrives on the 1st CG occasion. In this case, the UE may report the conservative result, that is, there is zero CG occasion that is not used. All of the data has arrived on the second occasion and the third CG occasion. In this case, after determining the amount of data, the UE may report an accurate value to the base station (that is, one CG occasion is not used), to avoid a case in which resources of the UE are insufficient after some resources are reallocated due to an unstable amount of data at the beginning of the CG periodicity and an inaccurate calculation result.

In this embodiment of this application, the UE may report, a plurality of times, a quantity of CG occasions that are not used in the periodicity, and refresh reported information based on an actual amount of data, so that a reported calculation result is more accurate, to avoid a waste of resources and a conflict.

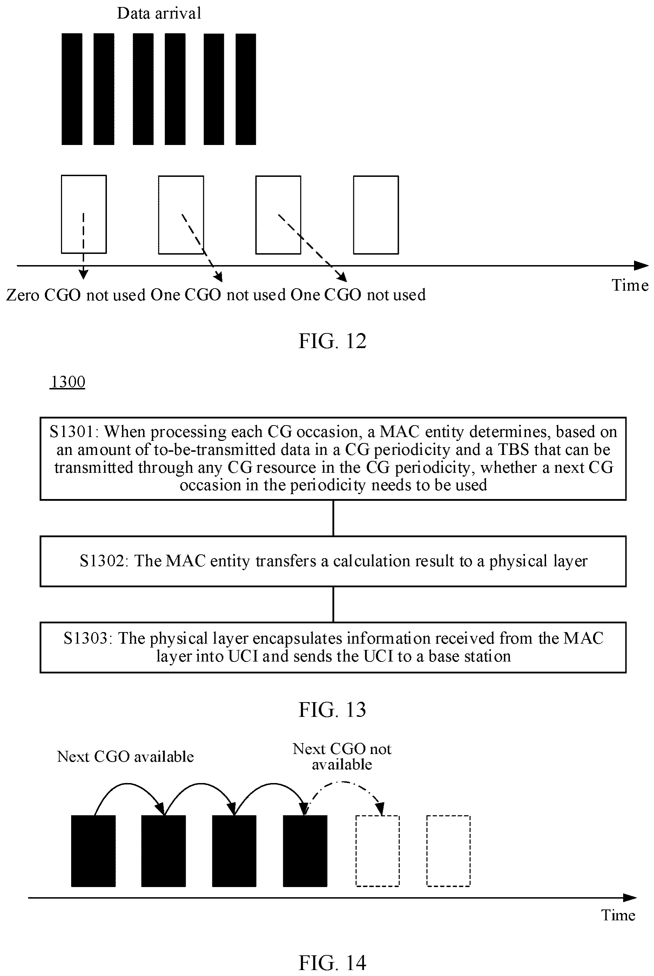

FIG. 13 is a schematic flowchart of another information transmission method according to an embodiment of this application. The method 1300 may be a detailed description of the method 600, and the method 1300 may be performed by UE.

A base station may indicate the UE in an explicit or implicit manner by using RRC signaling. For a specific CG configuration, the UE may calculate and feed back a CG occasion that is not used. For example, the base station may carry indication information in an information element in the CG configuration for explicit indication. For the CG configuration that is explicitly indicated, the UE may feed back a CG occasion that is not used. For another example, when the base station configures a CG to support a plurality of CG occasions in a single periodicity, the base station implicitly indicates that the UE should feed back a CG occasion that is not used for the CG. The base station may be the network device in the method 600, the UE may be the first terminal device in the method 600, and the CG occasion that is used or not used may indicate whether the CG transmission resource corresponding to the CG occasion in the method 500 is used to transmit the data for the first terminal device.

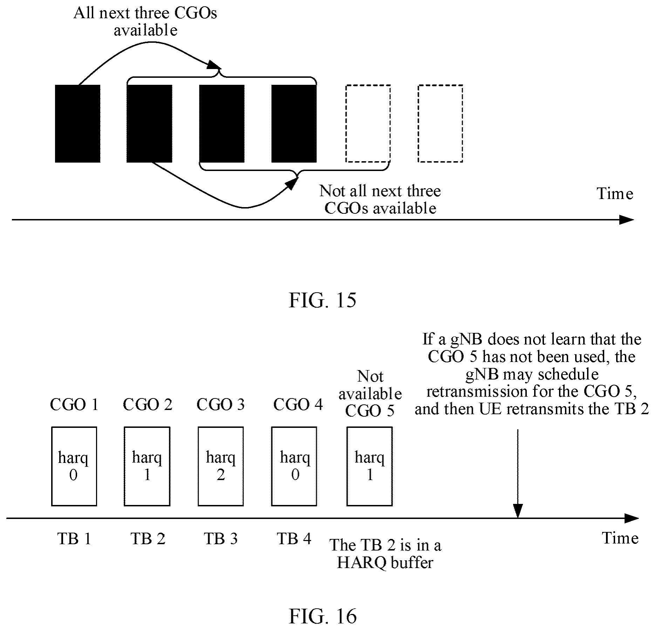

For the CG configuration, if the base station configures that the UE needs to feed back the CG occasion that is not used, the UE may determine, through calculation when processing each CG occasion, whether to use a next occasion or next K occasions, where K may be a positive integer. For example, as shown in FIG. 14, the UE may calculate, on each CG occasion, whether a next CG occasion is used. In FIG. 14, the UE may determine, on a fourth CG occasion in a periodicity, that a fifth CG occasion is not used. For another example, as shown in FIG. 15, the UE may calculate, on each CG occasion, whether all the next three CG occasions are used. In FIG. 15, the UE may determine, on a second CG occasion in a periodicity, that there is a CG occasion that is not used in a third occasion, a fourth occasion, and a fifth CG occasion.

The foregoing specific calculation process may be shown in FIG. 13. The method 1300 may include the following steps.

S1301: When processing each CG occasion, a MAC entity determines, based on an amount of to-be-transmitted data in a CG periodicity and a TBS that can be transmitted through any CG resource in the CG periodicity, whether a next CG occasion in the CG periodicity needs to be used.

For example, the MAC entity may use a flag to indicate the usage of the next CG occasion, where flag=1 indicates that the next CG occasion needs to be used, and flag=0 indicates that the next CG occasion does not need to be used. If the amount of to-be-transmitted data in the CG periodicity is greater than or equal to the TBS that can be transmitted through any CG resource in the CG periodicity, flag=1; or if the amount of to-be-transmitted data in the CG periodicity is less than the TBS that can be transmitted through any CG resource in the CG periodicity, flag=0.

The amount of to-be-transmitted data in the CG should include data from all LCHs that can be mapped to the CG configuration, and the sent data should be deducted.

In an embodiment, the amount of to-be-transmitted data may include additional information such as a packet header (for example, a MAC header) and a MAC CE. The UE may estimate, in the foregoing calculation process, the existing additional information, and consider the additional information in the amount of to-be-transmitted data, to avoid insufficient resources used in final calculation.

Optionally, the UE may perform determining in the following manner.

If a factor*the amount of to-be-transmitted data in the CG periodicity is greater than the TBS that can be transmitted through any CG resource in each CG periodicity, flag=1; or if a factor*the amount of to-be-transmitted data in the CG periodicity is less than or equal to the TBS that can be transmitted through any CG resource in each CG periodicity, flag=0.

The factor may be a number greater than 1 (for example, 1.1), and is used to represent that the existing additional information is considered. A value of the factor may be predefined or configured by the base station.

In an embodiment, when processing each CG occasion, the MAC entity may also determine whether the next K CG occasions are used, where K may be predefined or configured by the base station.

For example, a flag may be used to indicate the usage of the next K CG occasions, where flag=1 indicates that the next K CG occasions need to be used, and flag=0 indicates that not all of the next K CG occasions need to be used.

When TBSs that can be transmitted through all CG resources in the CG periodicity are the same, if the amount of to-be-transmitted data in the CG configuration is greater than K*the TBS that can be transmitted through any CG resource in the CG periodicity, flag=1; or if the amount of to-be-transmitted data in the CG configuration is less than or equal to K*the TBS that can be transmitted through any CG resource in the CG periodicity, flag=0.

Alternatively, if a factor*the amount of to-be-transmitted data in the CG configuration is greater than K*the TBS that can be transmitted through any CG resource in the CG periodicity, flag=1; or if a factor*the amount of to-be-transmitted data in the CG configuration and a factor is less than or equal to K*the TBS that can be transmitted through any CG resource in the CG periodicity, flag=0.

The symbol * represents multiplication, and K*the TBS that can be transmitted through any CG resource in the CG periodicity may be the first value in the method 600. Determining that the next K CG occasions need to be used may alternatively be understood as determining whether the next K CG transmission resources are used to transmit the data for the UE.

In an embodiment, when TBSs that can be transmitted through all CG resources in a CG periodicity are different, if the amount of to-be-transmitted data in the CG configuration is greater than a sum of TBSs that can be transmitted through the K consecutive CG transmission resources, flag=1; or if the amount of to-be-transmitted data in the CG configuration is less than or equal to a sum of TBSs that can be transmitted through the K consecutive CG transmission resources, flag=0.

S1302: The MAC entity transfers a calculation result (flag) to a physical layer (PHY layer).

For example, the MAC entity may introduce a new inter-layer interaction process to transfer the calculation result to the physical layer, or the MAC entity may reuse an existing inter-layer interaction process, for example, to transfer the calculation result and information such as a HARQ corresponding to the next one or K CG occasions and the MAC PDU to the physical layer.

S1303: The physical layer encapsulates information received from the MAC layer into UCI and sends the UCI to the base station.

For example, the physical layer may directly carry 1-bit flag information in the UCI, to indicate whether the next one or K CG occasions need to be used. Alternatively, after receiving the indication of flag=0 from the MAC layer, that is, after the physical layer has determined a specific CG occasion that is not used, the physical layer may report the quantity of CG occasions that are not used to the base station in the manner described in the foregoing embodiment. For example, the physical layer may determine whether to send the UCI on any CG occasion. For example, the physical layer may carry CG-UCI on a PUSCH sent on each CG occasion, where the CG-UCI includes latest information indicated by the MAC layer; or the physical layer may carry CG-UCI on a PUSCH sent on some CG occasions (for example, at an interval of two CG occasions), where the CG-UCI includes latest information indicated by the MAC layer; or the physical layer may send the UCI on a PUCCH for one or more times, where the UCI includes latest information indicated by the MAC layer; or if the CG is covered due to a conflict between dynamic scheduling and the CG, the physical layer may carry the UCI on a PUSCH corresponding to the dynamic scheduling, where the UCI includes the foregoing information. If the physical layer does not receive the indication information from the MAC layer, it is considered that N=0, that is, there is no CG occasion that is not used. In this case, the physical layer may indicate N=0 in the UCI, or do not send the UCI to the base station.

In this embodiment of this application, the UE may determine, on each CG occasion, whether the next CG occasion is used or the next K CG occasions are used, to determine the usage of the CG occasion in a timely manner based on the changed amount of data and report the usage to the base station, to avoid a waste of resources.

In the methods 900, 1100, and 1300, when one CG occasion is indicated not as used, for example, in the UCI or the MAC CE newly reported by the UE, the CG occasion is indicated as not used; or in the MAC CE or the DCI newly delivered by the base station, the CG occasion is indicated as not used, the UE needs to skip the CG occasion that is not used, that is, the UE does not send the data on the CG occasion (corresponding CG transmission resource) even if there is to-be-transmitted data or a MAC CE or another message in a buffer of the UE in this case, to avoid a signal conflict between users caused by reallocation of resources by the base station to another user.

For example, for a CG occasion indicated as not used, the UE may process the CG occasion according to the following principles.

In an embodiment, if a HARQ process associated with the CG occasion that is not used is determined (for example, calculated according to the conventional technology of the MAC layer protocol 38.321), and if configuredGrantTimer corresponding to the associated HARQ process is running, the MAC entity may not deliver the CG to a HARQ entity. In an embodiment, if a HARQ process associated with the CG occasion that is not used is determined (for example, calculated according to the conventional technology of the MAC layer protocol 38.321), and if configuredGrantTimer corresponding to the associated HARQ process is not running, the MAC entity may not deliver the CG to a HARQ entity, and refresh a buffer (buffer) of the HARQ process, or the MAC entity may deliver the CG to a HARQ entity, but not generate any MAC PDU or MAC CE for the HARQ process (where the HARQ buffer will be refreshed later). In an embodiment, if a HARQ process associated with the CG occasion has not yet been determined (for example, in NR-U, the UE independently selects a HARQ process only when the CG is in use), no additional processing is required. An objective of refreshing the HARQ buffer is to prevent the base station from scheduling retransmission by mistake because the base station considers that the CG occasion is used, and prevent the UE from sending old data in the HARQ buffer, to prevent from causing some unexpected consequences. As shown in FIG. 16, on a CG occasion 2, the UE sends a TB$_2$ by using a HARQ process 1, and then the UE indicates that a CG occasion 5 is not used. However, due to an accident, the base station does not receive indication information reported by the UE (for example, a signal is not correctly received). In this case, the base station considers that the data should be sent on the CG occasion 5 and the base station does not receive the data. Therefore, the base station schedules retransmission for the HARQ process 1, and expects the UE to retransmit the data corresponding to the CG occasion 5. However, in this case, the data in a buffer of the HARQ process 1 is actually the TB$_2$, and the UE sends the TB$_2$. This is not expected by the base station, so that some unnecessary processing performed by the base station may be caused. Therefore, after determining that the CG occasion 5 is not used, the UE may refresh a corresponding HARQ buffer, that is, clear the TB$_2$ from the buffer of the HARQ process 1. In this way, even if the base station schedules retransmission, the UE does not transmit data because there is no data in the buffer, and no misunderstanding is caused by the base station.

In this embodiment of this application, the UE may skip a CG occasion indicated as not used, and refresh a HARQ buffer corresponding to the CG occasion, to ensure that the UE and the base station perform consistent processing on the CG occasion, to avoid an accident such as a resource conflict.

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

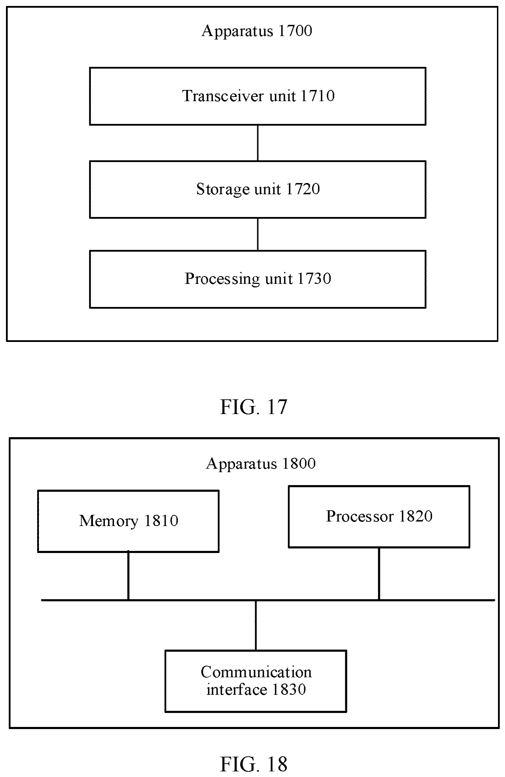

FIG. 17 is a diagram of an information transmission apparatus 1700 according to an embodiment of this application. The apparatus 1700 may include a transceiver unit 1710, a storage unit 1720, and a processing unit 1730. The transceiver unit 1710 is configured to receive and send instructions and/or data, and the transceiver unit 1710 may alternatively be referred to as a communication interface or a communication unit. The storage unit 1720 is configured to implement a corresponding storage function, and store corresponding instructions and/or data. The processing unit 1730 is configured to perform data processing. The processing unit 1730 may read the instructions and/or the data in the storage unit 1720, so that the apparatus 1700 is enabled to implement the foregoing information transmission method.

In an embodiment, the apparatus 1700 includes a transceiver unit 1710 and a processing unit 1730. The processing unit 1730 is configured to: determine, at a first moment in a configured grant CG periodicity and based on an amount of to-be-transmitted data in the CG periodicity and a transport block size TBS that can be transmitted through any one or more CG transmission resources in the CG periodicity, whether a plurality of CG transmission resources in the CG periodicity are used to transmit data for a first terminal device; and the transceiver unit 1710 is configured to send indication information to a network device, where the indication information indicates whether the plurality of CG transmission resources in the CG periodicity are used to transmit the data for the first terminal device.

In a possible implementation, the first moment includes a moment at which the first terminal device processes a 1st CG transmission resource in the CG periodicity; a moment at which the to-be-transmitted data in the CG periodicity arrives at an access stratum of the first terminal device; or a moment at which the first terminal device determines the amount of to-be-transmitted data in the CG periodicity.

In a possible implementation, the processing unit 1730 is specifically configured to determine, according to the following formula, a quantity of CG transmission resources used to transmit the data for the first terminal device:

$$M = \lceil (\frac{A}{B}) \rceil$$

or determine, according to the following formula, a quantity of the plurality of CG transmission resources that are not used to transmit the data for the first terminal device:

$$N = \lfloor (L - \frac{A}{B}) \rfloor$$

where M is the quantity of CG transmission resources used to transmit the data for the first terminal device, N is the quantity of CG transmission resources that are not used to transmit the data for the first terminal device, L is a total quantity of CG transmission resources in the CG periodicity, A is the amount of to-be-transmitted data in the CG periodicity, B is a TBS that can be transmitted through any CG resource in the CG periodicity, $\lceil \ \rceil$ is rounding up, and $\lfloor \ \rfloor$ is rounding down.

In a possible implementation, the first moment includes a moment at which the first terminal device processes each CG transmission resource in the CG periodicity.

In a possible implementation, the processing unit 1730 is specifically configured to determine, based on the amount of to-be-transmitted data, the TBS that can be transmitted through any one or more CG transmission resources, and a quantity of CG transmission resources that have been used in the CG periodicity, whether the plurality of CG transmission resources are used to transmit the data for the first terminal device.

In a possible implementation, the processing unit 1730 is specifically configured to determine, according to the following formula, a quantity of CG transmission resources used to transmit the data for the first terminal device:

$$M = \lceil (i + \frac{A}{B}) \rceil$$

or determine, according to the following formula, a quantity of CG transmission resources that are not used to transmit the data for the first terminal device:

$$N = \lfloor (L - i - \frac{A}{B}) \rfloor$$

where M is the quantity of CG transmission resources used to transmit the data for the first terminal device, N is the quantity of CG transmission resources that are not used to transmit the data for the first terminal device, L is a total quantity of CG transmission resources in the CG periodicity, i is the quantity of CG transmission resources that have been used, A is the amount of to-be-transmitted data in the CG periodicity, B is a TBS that can be transmitted through any CG resource in the CG periodicity, $\lceil \ \rceil$ is rounding up, and $\lfloor \ \rfloor$ is rounding down.

In a possible implementation, the processing unit 1730 is specifically configured to determine, based on the amount of to-be-transmitted data, the TBS that can be transmitted through any one or more CG transmission resources, and a preset factor, whether the plurality of CG transmission resources are used to transmit the data for the first terminal device, where the preset factor is predefined or is configured by the network device, and the preset factor is associated with an amount of data in a medium access control MAC packet header and/or a medium access control control element MAC CE in the to-be-transmitted data.

In an embodiment, the apparatus 1700 includes a transceiver unit 1710 and a processing unit 1730. The processing unit 1730 is configured to determine, based on an amount of to-be-transmitted data in a CG periodicity and a TBS that can be transmitted through any one or more CG transmission resources in the CG periodicity, whether K consecutive CG transmission resources after any CG transmission resource in the CG periodicity are used to transmit data for a first terminal device, where K is a positive integer; and the transceiver unit 1710 is configured to send indication information to a network device, where the indication information indicates whether the K consecutive CG transmission resources after any CG transmission resource in the CG periodicity are used to transmit the data for the first terminal device.

In a possible implementation, the processing unit 1730 is specifically configured to: when the amount of to-be-transmitted data is greater than or equal to a first value, determine that all of the K CG transmission resources are used to transmit the data for the first terminal device; or when the amount of to-be-transmitted data is less than a first value, determine that not all of the K CG transmission resources are used to transmit the data for the first terminal device, where the first value is a product of K and the TBS that can be transmitted through any one or more CG transmission resources.

In an embodiment, the apparatus 1700 includes a processing unit 1730. The processing unit 1730 is configured to: determine, based on an amount of to-be-transmitted data in a CG periodicity and a TBS that can be transmitted through any one or more CG transmission resources in the CG periodicity, a first CG transmission resource in the CG periodicity that is not used to transmit data for a first terminal device; and refresh a buffer of a hybrid automatic repeat request HARQ process corresponding to the first CG transmission resource.

In a possible implementation, the processing unit 1730 is specifically configured to refresh the buffer of the HARQ process when a configured grant timer corresponding to the HARQ process is not running.

In an embodiment, the apparatus 1700 includes a processing unit 1730. The processing unit 1730 is configured to: when an amount of to-be-transmitted data of a first terminal device in a CG periodicity is greater than a sum of TBSs that can be transmitted through first X CG transmission resources in the CG periodicity, and is less than or equal to a sum of TBSs that can be transmitted through first X+1 CG transmission resources in the CG periodicity, send indication information to a network device, where the indication information indicates the first terminal device to use first M CG transmission resources in the CG periodicity, or the indication information indicates the first terminal device not to use last N CG transmission resources in the CG periodicity; X is a non-negative integer, M is greater than or equal to X+1 and less than or equal to L, N is greater than or equal to 0 and less than or equal to L-X-1, and L is a total quantity of CG transmission resources in the CG periodicity.

FIG. 18 is a diagram of another information transmission apparatus 1800 according to an embodiment of this application.

The apparatus 1800 includes a memory 1810, a processor 1820, and a communication interface 1830. The memory 1810, the processor 1820, and the communication interface 1830 are connected through an internal connection path. The memory 1810 is configured to store instructions. The processor 1820 is configured to execute the instructions stored in the memory 1810, to control the communication interface 1830 to obtain information, so that the apparatus 1800 is enabled to implement the foregoing information transmission method. Optionally, the memory 1810 may be coupled to the processor 1820 through an interface, or may be integrated with the processor 1820.

It should be noted that, the communication interface 1830 uses a transceiver apparatus, for example, but not limited to, a transceiver. The communication interface 1830 may further include an input/output interface (input/output interface).

The processor 1820 stores one or more computer programs, and the one or more computer programs include instructions. When the instructions are run by the processor 1820, the information transmission apparatus 1800 is enabled to perform the information transmission method in the foregoing embodiments.

During implementation, the steps of the foregoing method may be implemented by using hardware integrated logical circuit in the processor 1820, or by using instructions in a form of software. The method disclosed in embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1810, and the processor 1820 reads information in the memory 1810 and implements the steps of the foregoing method in combination with hardware of the processor. To avoid repetition, details are not described herein again.

Optionally, the communication interface 1830 in FIG. 18 may implement the transceiver unit 1710 in FIG. 17, the memory 1810 in FIG. 18 may implement the storage unit 1720 in FIG. 17, and the processor 1820 in FIG. 18 may implement the processing unit 1730 in FIG. 17.

An embodiment of this application further provides a computer-readable storage medium. The computer-readable storage medium stores program code. When the computer program code is run on a computer, the computer is enabled to perform any one of the methods in FIG. 5 to FIG. 13.

An embodiment of this application further provides a computer program product. The computer product includes a computer program. When the computer program is run, a computer is enabled to perform any one of the methods in FIG. 5 to FIG. 13.

An embodiment of this application further provides a chip, including a circuit. The circuit is configured to perform any one of the methods in FIG. 5 to FIG. 13.

Optionally, the chip includes a processor and an interface, configured to invoke, from a memory, and run a computer program stored in the memory, to perform any one of the methods in FIG. 5 to FIG. 13.

An embodiment of this application further provides a terminal device, including the information transmission apparatus shown in FIG. 17 or FIG. 18.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, It should be understood that, the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method comprises:

   determining, at a first moment in a configured grant CG periodicity and based on an amount of to-be-transmitted data in the CG periodicity and a transport block size TBS that can be transmitted through any one or more CG transmission resources in the CG periodicity, whether a plurality of CG transmission resources in the CG periodicity are used to transmit data for a first terminal device; and
   sending indication information to a network device, wherein the indication information indicates whether the plurality of CG transmission resources in the CG periodicity are used to transmit the data for the first terminal device.

2. The method according to claim 1, wherein the first moment comprises:
   a moment at which the first terminal device processes a 1st CG transmission resource in the CG periodicity; a moment at which the to-be-transmitted data in the CG periodicity arrives at an access stratum of the first terminal device; or a moment at which the first terminal device determines the amount of to-be-transmitted data in the CG periodicity.

3. The method according to claim 2, wherein determining, based on the amount of to-be-transmitted data in the CG periodicity and the transport block size TBS that can be transmitted through any one or more CG transmission resources in the CG periodicity, whether the plurality of CG transmission resources in the CG periodicity are used to transmit the data for the first terminal device comprises:

   determining, according to the following formula, a quantity of CG transmission resources used to transmit the data for the first terminal device:

   $$M = \lceil (\frac{A}{B}) \rceil$$

   or determining, according to the following formula, a quantity of CG transmission resources that are not used to transmit the data for the first terminal device:

   $$N = \lfloor (L - \frac{A}{B}) \rfloor$$

   wherein M is the quantity of CG transmission resources used to transmit the data for the first terminal device, N is the quantity of CG transmission resources that are not used to transmit the data for the first terminal device, L is a total quantity of CG transmission resources in the CG periodicity, A is the amount of to-be-transmitted data in the CG periodicity, B is a TBS that can be transmitted through any CG resource in the CG periodicity, $\lceil \rceil$ is rounding up, and $\lfloor \rfloor$ is rounding down.

4. The method according to claim 1, wherein the first moment comprises a moment at which the first terminal device processes each CG transmission resource in the CG periodicity.

**5.** The method according to claim 4, wherein determining, based on the amount of to-be-transmitted data in the CG periodicity and the transport block size TBS that can be transmitted through any one or more CG transmission resources in the CG periodicity, whether the plurality of CG transmission resources in the CG periodicity are used to transmit the data for the first terminal device comprises:
determining, based on the amount of to-be-transmitted data, the TBS that can be transmitted through any one or more CG transmission resources, and a quantity of CG transmission resources that have been used in the CG periodicity, whether the plurality of CG transmission resources are used to transmit the data for the first terminal device.

**6.** The method according to claim 5, wherein determining, based on the amount of to-be-transmitted data, the TBS that can be transmitted through any one or more CG transmission resources, and the quantity of CG transmission resources that have been used in the CG periodicity, whether the plurality of CG transmission resources are used to transmit the data for the first terminal device comprises:

determining, according to the following formula, a quantity of CG transmission resources used to transmit the data for the first terminal device:

$$M = \lceil (i + \frac{A}{B}) \rceil$$

or determining, according to the following formula, a quantity of CG transmission resources that are not used to transmit the data for the first terminal device:

$$N = \lfloor (L - i - \frac{A}{B}) \rfloor$$

wherein M is the quantity of CG transmission resources used to transmit the data for the first terminal device, N is the quantity of CG transmission resources that are not used to transmit the data for the first terminal device, L is a total quantity of CG transmission resources in the CG periodicity, i is the quantity of CG transmission resources that have been used, A is the amount of to-be-transmitted data in the CG periodicity, B is a TBS that can be transmitted through any CG resource in the CG periodicity, $\lceil \ \rceil$ is rounding up, and $\lfloor \ \rfloor$ is rounding down.

**7.** The method according to any one of claims 1 to 6, wherein determining, based on the amount of to-be-transmitted data in the CG periodicity and the transport block size TBS that can be transmitted through any one or more CG transmission resources in the CG periodicity, whether the plurality of CG transmission resources in the CG periodicity are used to transmit the data for the first terminal device comprises:

determining, based on the amount of to-be-transmitted data, the TBS that can be transmitted through any one or more CG transmission resources, and a preset factor, whether the plurality of CG transmission resources are used to transmit the data for the first terminal device, wherein
the preset factor is associated with an amount of data in a medium access control MAC packet header and/or a medium access control control element MAC CE in the to-be-transmitted data.

**8.** An information transmission method, wherein the method comprises:

determining, based on an amount of to-be-transmitted data in a CG periodicity and a TBS that can be transmitted through any one or more CG transmission resources in the CG periodicity, whether K consecutive CG transmission resources after one CG transmission resource in the CG periodicity are used to transmit data for a first terminal device, wherein K is a positive integer; and
sending indication information to a network device, wherein the indication information indicates whether the K CG transmission resources are used to transmit the data for the first terminal device.

**9.** The method according to claim 8, wherein determining, based on the amount of to-be-transmitted data in the CG periodicity and the TBS that can be transmitted through any one or more CG transmission resources in the CG periodicity, whether the K consecutive CG transmission resources after one CG transmission resource in the CG periodicity are used to transmit the data for the first terminal device comprises:

when the amount of to-be-transmitted data is greater than or equal to a first value, determining that all of the K CG transmission resources are used to transmit the data for the first terminal device; or
when the amount of to-be-transmitted data is less than a first value, determining that not all of the K CG transmission resources are used to transmit the data for the first terminal device, wherein
the first value is a product of K and a TBS that can be transmitted through any transmission resource.

10. The method according to claim 8 or 9, wherein K is configured by the network device.

11. The method according to any one of claims 8 to 10, wherein the indication information comprises a bitmap, and each bit in the bitmap indicates whether a CG transmission resource is used.

12. An information transmission method, wherein the method comprises:

determining, based on an amount of to-be-transmitted data in a CG periodicity and a TBS that can be transmitted through any one or more CG transmission resources in the CG periodicity, a first CG transmission resource in the CG periodicity that is not used to transmit data for a first terminal device; and refreshing a buffer of a hybrid automatic repeat request HARQ process corresponding to the first CG transmission resource.

13. The method according to claim 12, wherein refreshing the buffer of the hybrid automatic repeat request HARQ process corresponding to the first CG transmission resource comprises: refreshing the buffer of the HARQ process when a configured grant timer corresponding to the HARQ process is not running.

14. An information transmission apparatus, wherein the apparatus comprises a transceiver unit and a processing unit, wherein

the processing unit is configured to determine, at a first moment in a configured grant CG periodicity and based on an amount of to-be-transmitted data in the CG periodicity and a transport block size TBS that can be transmitted through any one or more CG transmission resources in the CG periodicity, whether a plurality of CG transmission resources in the CG periodicity are used to transmit data for a first terminal device; and the transceiver unit is configured to send indication information to a network device, wherein the indication information indicates whether the plurality of CG transmission resources in the CG periodicity are used to transmit the data for the first terminal device.

15. The apparatus according to claim 14, wherein the first moment comprises:
a moment at which the first terminal device processes a 1st CG transmission in the CG periodicity; a moment at which the to-be-transmitted data in the CG periodicity arrives at an access stratum of the first terminal device; or a moment at which the first terminal device determines the amount of to-be-transmitted data in the CG periodicity.

16. The apparatus according to claim 15, wherein the processing unit is specifically configured to:

determine, according to the following formula, a quantity of CG transmission resources used to transmit the data for the first terminal device:

$$M = \lceil (\frac{A}{B}) \rceil$$

or determine, according to the following formula, a quantity of CG transmission resources that are not used to transmit the data for the first terminal device:

$$N = \lfloor (L - \frac{A}{B}) \rfloor$$

wherein M is the quantity of CG transmission resources used to transmit the data for the first terminal device, N is the quantity of CG transmission resources that are not used to transmit the data for the first terminal device, L is a total quantity of CG transmission resources in the CG periodicity, A is the amount of to-be-transmitted data in the CG periodicity, B is a TBS that can be transmitted through any CG resource in the CG periodicity, $\lceil \rceil$ is rounding up, and $\lfloor \rfloor$ is rounding down.

17. The apparatus according to claim 14, wherein the first moment comprises a moment at which the first terminal device processes each CG transmission resource in the CG periodicity.

18. The apparatus according to claim 17, wherein the processing unit is specifically configured to determine, based on the amount of to-be-transmitted data, the TBS that can be transmitted through any one or more CG transmission resources, and a quantity of CG transmission resources that have been used in the CG periodicity, whether the plurality of CG transmission resources are used to transmit the data for the first terminal device.

19. The apparatus according to claim 18, wherein the processing unit is specifically configured to:

determine, according to the following formula, a quantity of CG transmission resources used to transmit the data for the first terminal device:

$$M = \lceil (i + \frac{A}{B}) \rceil$$

or determine, according to the following formula, a quantity of CG transmission resources that are not used to transmit the data for the first terminal device:

$$N = \lfloor (L - i - \frac{A}{B}) \rceil$$

wherein M is the quantity of CG transmission resources used to transmit the data for the first terminal device, N is the quantity of CG transmission resources that are not used to transmit the data for the first terminal device, L is a total quantity of CG transmission resources in the CG periodicity, i is the quantity of CG transmission resources that have been used, A is the amount of to-be-transmitted data in the CG periodicity, B is a TBS that can be transmitted through any CG resource in the CG periodicity, $\lceil \ \rceil$ is rounding up, and $\lfloor \ \rfloor$ is rounding down.

20. The apparatus according to any one of claims 14 to 19, wherein

the processing unit is specifically configured to determine, based on the amount of to-be-transmitted data, the TBS that can be transmitted through any one or more CG transmission resources, and a preset factor, whether the plurality of CG transmission resources are used to transmit the data for the first terminal device, wherein
the preset factor is associated with an amount of data in a medium access control MAC packet header and/or a medium access control control element MAC CE in the to-be-transmitted data.

21. An information transmission apparatus, wherein the apparatus comprises a transceiver unit and a processing unit, wherein

the processing unit is configured to determine, based on an amount of to-be-transmitted data in a CG periodicity and a TBS that can be transmitted through any one or more CG transmission resources in the CG periodicity, whether K consecutive CG transmission resources after one CG transmission resource in the CG periodicity are used to transmit data for a first terminal device, wherein K is a positive integer; and
the transceiver unit is configured to send indication information to a network device, wherein the indication information indicates whether the K CG transmission resources are used to transmit the data for the first terminal device.

22. The apparatus according to claim 21, wherein

the processing unit is specifically configured to:
when the amount of to-be-transmitted data is greater than or equal to a first value, determine that all of the K CG transmission resources are used to transmit the data for the first terminal device; or
when the amount of to-be-transmitted data is less than a first value, determine that not all of the K CG transmission resources are used to transmit the data for the first terminal device, wherein
the first value is a product of K and a TBS that can be transmitted through any transmission resource.

23. The apparatus according to claim 21 or 22, wherein K is configured by the network device.

24. The apparatus according to any one of claims 21 to 23, wherein the indication information comprises a bitmap, and each bit in the bitmap indicates whether a CG transmission resource is used.

25. An information transmission apparatus, wherein the apparatus comprises a processing unit, wherein the processing unit is configured to:

determine, based on an amount of to-be-transmitted data in a CG periodicity and a TBS that can be transmitted through any one or more CG transmission resources in the CG periodicity, a first CG resource in the CG periodicity that is not used to transmit data for a first terminal device; and
refresh a buffer of a hybrid automatic repeat request HARQ process corresponding to the first CG transmission resource.

26. The apparatus according to claim 25, wherein the processing unit is specifically configured to refresh the buffer of the HARQ process when a configured grant timer corresponding to the HARQ process is not running.

27. A processing apparatus, comprising a processor and a memory, wherein the processor is coupled to the memory, and is configured to read and execute instructions in the memory, to perform the method according to any one of claims 1 to 7, or the method according to claims 8 to 11, or the method according to claim 12 or 13.

28. A computer-readable storage medium, wherein the computer-readable storage medium stores program code, and when the computer program code is run on a computer, the computer is enabled to perform the method according to any one of claims 1 to 13.

29. A chip, comprising a circuit, wherein the circuit is configured to perform the method according to any one of claims 1 to 13.

30. A computer program product, wherein the computer product comprises a computer program, and when the computer program is run, a computer is enabled to perform the method according to any one of claims 1 to 13.

FIG. 1

FIG. 2

RRC signal (configuring a CG start moment, a periodicity, a quantity of HARQ processes, a time-frequency resource, and an MCS)

Periodicity

CG type 1

CG PUSCH resource

Time

RRC signal (configuring a periodicity and a quantity of HARQ processes)

Activate DCI (scheduling a first CG, and indicating a time-frequency resource and an MCS)

Periodicity

CG type 2

CG PUSCH resource

Time

FIG. 3

CG occasion not used

Periodicity

CG PUSCH resource

Time

FIG. 4

500

```
┌─────────────┐                                          ┌─────────────┐
│First terminal│                                          │  Network    │
│   device    │                                          │   device    │
└─────────────┘                                          └─────────────┘
```

S501: Determine, at a first moment in a CG periodicity and based on an amount of to-be-transmitted data in the CG periodicity and a TBS that can be transmitted through any one or more CG transmission resources in the CG periodicity, whether a plurality of CG resources in the CG periodicity are used to transmit data for the first terminal device

S502: Indication information #1 ⟶

**FIG. 5**

600

```
┌─────────────┐                                          ┌─────────────┐
│First terminal│                                          │  Network    │
│   device    │                                          │   device    │
└─────────────┘                                          └─────────────┘
```

S601: Determine, based on an amount of to-be-transmitted data in a CG periodicity and a TBS that can be transmitted through any one or more CG transmission resources in the CG periodicity, whether K consecutive CG transmission resources after any CG transmission resource in the CG periodicity are used to transmit data for the first terminal device

S602: Indication information #2 ⟶

**FIG. 6**

700

S701: Determine, based on an amount of to-be-transmitted data in a CG periodicity and a TBS that can be transmitted through any one or more CG transmission resources in the CG periodicity, a first CG transmission resource in the CG periodicity that is not used to transmit data for a first terminal device

S702: Refresh a buffer of a HARQ process corresponding to the first CG transmission resource

FIG. 7

800

S801: When an amount of to-be-transmitted data of a first terminal device in a CG periodicity is greater than a sum of TBSs that can be transmitted through first X CG transmission resources in the CG periodicity, and is less than or equal to a sum of TBSs that can be transmitted through first X+1 CG transmission resources in the CG periodicity, the first terminal device sends indication information #3 to a network device

FIG. 8

900

S901: When processing a $1^{st}$ CG occasion in each CG periodicity, a MAC entity determines, based on an amount of to-be-transmitted data in the CG periodicity and a TBS that can be transmitted through any CG resource in the CG periodicity, a quantity of CG occasions that are used or not used in the periodicity

S902: The MAC entity transfers a calculation result to a physical layer

S903: The physical layer encapsulates information received from a MAC layer into UCI and sends the UCI to a base station

FIG. 9

gNB

Two CG occasions not used

One CG occasion not used

UE

Buffer

Periodicity

Time

FIG. 10

1100

| S1101: When processing each CG occasion, a MAC entity determines, based on an amount of to-be-transmitted data in a CG periodicity and a TBS that can be transmitted through any CG resource in the CG periodicity, a quantity of CG occasions that are used or not used in the periodicity |

| S1102: The MAC entity transfers a calculation result to a physical layer |

| S1103: The physical layer encapsulates information received from a MAC layer into UCI and sends the UCI to a base station |

FIG. 11

Data arrival

Zero CGO not used   One CGO not used   One CGO not used

Time

FIG. 12

1300

| S1301: When processing each CG occasion, a MAC entity determines, based on an amount of to-be-transmitted data in a CG periodicity and a TBS that can be transmitted through any CG resource in the CG periodicity, whether a next CG occasion in the periodicity needs to be used |
|---|

| S1302: The MAC entity transfers a calculation result to a physical layer |
|---|

| S1303: The physical layer encapsulates information received from the MAC layer into UCI and sends the UCI to a base station |
|---|

FIG. 13

Next CGO available

Next CGO not available

Time

FIG. 14

All next three CGOs
available

Not all next three
CGOs available

Time

FIG. 15

If a gNB does not learn that the
CGO 5 has not been used, the
gNB may schedule
retransmission for the CGO 5,
and then UE retransmits the TB 2

| CGO 1 | CGO 2 | CGO 3 | CGO 4 | Not available CGO 5 |
|-------|-------|-------|-------|-------|
| harq 0 | harq 1 | harq 2 | harq 0 | harq 1 |
| TB 1 | TB 2 | TB 3 | TB 4 | |

The TB 2 is in a
HARQ buffer

Time

FIG. 16

Apparatus 1700

Transceiver unit 1710

Storage unit 1720

Processing unit 1730

FIG. 17

Apparatus 1800

Memory 1810

Processor 1820

Communication interface 1830

FIG. 18

## INTERNATIONAL SEARCH REPORT

| International application No. |
| --- |
| **PCT/CN2024/075946** |

### A. CLASSIFICATION OF SUBJECT MATTER

H04W 72/12(2023.01)i

According to International Patent Classification (IPC) or to both national classification and IPC

### B. FIELDS SEARCHED

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, ENTXTC, ENTXT, DWPI, 3GPP: XR, 增强, 配置授权, CG, 传输块, 大小, 尺寸, TBS, 固定, 灵活, 浪费, 连续, 时刻, 时间, 周期, HARQ, 缓冲, 缓存, 刷新, 更新, 重置, configured grant, TB, Transmission block, transport block, size, waste, dynamic, flexible, fixed, period, periodicity, time, start, buffer, refresh, renew, update

### C. DOCUMENTS CONSIDERED TO BE RELEVANT

| Category* | Citation of document, with indication, where appropriate, of the relevant passages | Relevant to claim No. |
| --- | --- | --- |
| X | CN 115175338 A (BEIJING SAMSUNG TELECOM R&D CENTER et al.) 11 October 2022 (2022-10-11) <br> description, paragraphs 76-139 and 176-193 | 1, 2, 4, 5, 7-11, 14, 15, 17, 18, 20-24, 27-30 |
| Y | CN 115175338 A (BEIJING SAMSUNG TELECOM R&D CENTER et al.) 11 October 2022 (2022-10-11) <br> description, paragraphs 76-139 and 176-193 | 12, 13, 25-30 |
| Y | WO 2022086398 A1 (TELEFONAKTIEBOLAGET LM ERICSSON (PUBL)) 28 April 2022 (2022-04-28) <br> description, page 16, line 14-page 19, line 25 | 12, 13, 25-30 |
| A | WO 2022027308 A1 (APPLE INC.) 10 February 2022 (2022-02-10) <br> entire document | 1-30 |
| A | HUAWEI et al. "Remaining details of sidelink resource allocation mode 1" <br> *3GPP TSG RAN WG1 Meeting #100bis-e R1-2001551*, 30 April 2020 (2020-04-30), <br> entire document | 1-30 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 May 2024** | **14 May 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

<table>
<tr><td>International application No.<br><br>**PCT/CN2024/075946**</td></tr>
</table>

**C.     DOCUMENTS CONSIDERED TO BE RELEVANT**

| Category* | Citation of document, with indication, where appropriate, of the relevant passages | Relevant to claim No. |
|---|---|---|
| A | VIVO. "Challenges and potential enhancements of XR"<br>*3GPP TSG RAN WG1 #104-e R1-2100479*, 05 February 2021 (2021-02-05),<br>   entire document | 1-30 |

Form PCT/ISA/210 (second sheet) (July 2022)

**INTERNATIONAL SEARCH REPORT**
**Information on patent family members**

| International application No. |
| --- |
| **PCT/CN2024/075946** |

| Patent document cited in search report | | | Publication date (day/month/year) | Patent family member(s) | | | Publication date (day/month/year) |
| --- | --- | --- | --- | --- | --- | --- | --- |
| CN | 115175338 | A | 11 October 2022 | US | 2022322415 | A1 | 06 October 2022 |
| | | | | WO | 2022211596 | A1 | 06 October 2022 |
| | | | | KR | 20230165797 | A | 05 December 2023 |
| WO | 2022086398 | A1 | 28 April 2022 | | None | | |
| WO | 2022027308 | A1 | 10 February 2022 | US | 2022312459 | A1 | 29 September 2022 |
| | | | | EP | 4165894 | A1 | 19 April 2023 |
| | | | | CN | 116097812 | A | 09 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310152929